(19) Europäisches Patentamt / European Patent Office / Office européen des brevets

(11) **EP 3 014 491 B1**

(12) **EUROPEAN PATENT SPECIFICATION**

(45) Date of publication and mention
of the grant of the patent:
**02.12.2020 Bulletin 2020/49**

(21) Application number: **14817132.5**

(22) Date of filing: **05.06.2014**

(51) Int Cl.:
***G06F 17/00*** *(2019.01)*

(86) International application number:
**PCT/US2014/041179**

(87) International publication number:
**WO 2014/209571 (31.12.2014 Gazette 2014/53)**

(54) **DISPLAYING DEMOGRAPHIC DATA**

ANZEIGE VON DEMOGRAFISCHEN DATEN

AFFICHAGE DE DONNÉES DÉMOGRAPHIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2013 US 201313931179**

(43) Date of publication of application:
**04.05.2016 Bulletin 2016/18**

(73) Proprietor: **Streetlight Data, Inc.
San Francisco, CA 94017 (US)**

(72) Inventors:
• **SCHEWEL, Laura
San Francisco, CA 94107 (US)**
• **FRIEDMAN, Paul
San Francisco, CA 94107 (US)**

(74) Representative: **McKinnon, Alistair James
WP Thompson
138 Fetter Lane
London EC4A 1BT (GB)**

(56) References cited:
WO-A1-2013/001421   US-A1- 2007 285 426
US-A1- 2011 282 571   US-A1- 2012 071 175
US-A1- 2012 136 959   US-A1- 2012 303 455
US-A1- 2013 091 146   US-A1- 2013 097 162

• JEFFREY HIGHTOWER ET AL: "Learning and Recognizing the Places We Go", 19 August 2005 (2005-08-19), UBICOMP 2005: UBIQUITOUS COMPUTING; [LECTURE NOTES IN COMPUTER SCIENCE;;LNCS], SPRINGER-VERLAG, BERLIN/HEIDELBERG, PAGE(S) 159 - 176, XP019015081, ISBN: 978-3-540-28760-5 * the whole document *

**Description**

## BACKGROUND OF THE INVENTION

There is a tremendous amount of demographic data that could be extremely useful (e.g., to various economic and government parties such as the Department of Transportation, economic planners, real estate professionals, retailers etc.). For example, an owner of a store might like to know where his customers and other people in the area of his store or driving by his store are coming from, what their income distribution is, where else they shop, where they work, etc. in order to better serve them. However, this data is difficult to determine.

US 2013/097162 describes a method and system for generating and presenting search results that are based on location-based information from social networks, media, the internet, and/or actual on-site location.

US 2012/071175 describes a system for associating location data from one or more unique sources. The place and time of a unique location enabled device are associated with stored demographic information relating to the particular place and particular time. The place and time of the unique location enabled device are associated with a historical record of past locations and time of locations that the device has been. Based on the association of demographical information and historical information, the unique location enable device is assigned to one or more groups or tribes. The location of all members of the group or tribe can be aggregated and exported for further analysis or display, thereby showing all group or tribe members at a particular time and place.

Prior art document XP 019015081 - Jeffrey Hightower et al: "Learning and Recognising the Places We Go" - 19 August 2005 discloses an algorithm called BeaconPrint that uses WiFi and GSM radio fingerprints collected by someone's personal mobile device to automatically learn the places they go and then detect when they return to those places. BeaconPrint does not automatically assign names or semantics to places. Rather, it provides the technological foundation to support this task. We compare BeaconPrint to three existing algorithms using month-long trace logs from each of three people. Algorithmic results are supplemented with a survey study about the places people go. BeaconPrint is over 90% accurate in learning and recognizing places. Additionally, it improves accuracy in recognizing places visited infrequently or for short durations-a category where previous approaches have fared poorly. BeaconPrint demonstrates 63% accuracy for places someone returns to only once or visits for less than 10 minutes, increasing to 80% accuracy for places visited twice.

Prior art document WO 2013/001421 A1 discloses a method of estimating the location of a mobile device, the mobile device being configured for use in a cellular mobile communications network comprising a plurality of base stations, the method comprising generating a database of locations visited by the mobile device by obtaining measurements of the position of the mobile device over time using a satellite-based positioning system; obtaining the identity of the base station serving the mobile device at the time of each measurement of the position of the mobile device; and analysing the measurements to identify locations visited by the mobile device, each location being associated with a particular base station, such that the mobile device is attached to said base station when at said location; and during subsequent use of the mobile device, in the event that it is not possible to use the satellite-based positioning system to measure the position of the mobile device, estimating the location of the mobile device as one or more identified locations that are associated with the base station to which the mobile device is currently attached. Corresponding apparatus and computer program products are also provided.

The present invention is defined by the system of independent claim 1, the method of independent claim 4 and the computer program product in a computer readable storage of independent claim 5. Dependent claims define preferred embodiments.

## BRIEF DESCRIPTION OF THE DRAWINGS

Various embodiments of the invention are disclosed in the following detailed description and the accompanying drawings.

Figure 1 is a diagram illustrating an embodiment of a wireless network system.

Figure 2A is a flow diagram illustrating an embodiment of a process for determining demographic data.

Figure 2B is a flow diagram illustrating an embodiment of a process for determining a demographic data.

Figure 2C is a flow diagram illustrating an embodiment of a process for displaying a demographic data.

Figure 3 is a flow diagram illustrating an embodiment of a process for determining the probability a device is associated with a location of interest.

Figure 4 is a flow diagram illustrating an embodiment of a process for determining locations associated with a device.

Figure 5 is a flow diagram illustrating an embodiment of a process for determining a home location.

Figure 6 is a flow diagram illustrating an embodiment of a process for determining demographics associated with a device.

Figure 7 is a flow diagram illustrating an embodiment of a process for determining a location representation scaling factor.

Figure 8 is a line graph illustrating a comparison between the number of visitors to an area on a typical Friday and a special event Friday.

Figure 9 is a stacked bar graph illustrating data describing visitors to an area during a special event.

Figure 10A is a bar graph illustrating data describing demographics of visitors to an area.

Figure 10B is a bar graph illustrating data describing demographics of visitors to an area.

Figure 11 is a map illustrating data describing home locations of all visitors to a location of interest in a given month.

## DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

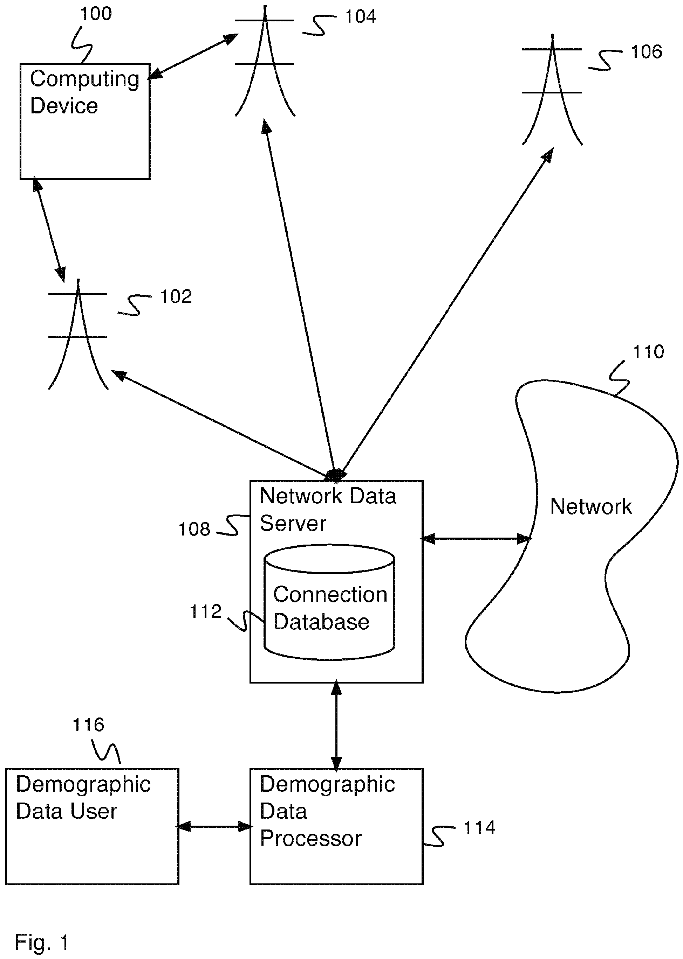

Figure 1 is a diagram illustrating an embodiment of a wireless network system. In some embodiments, the wireless network system of Figure 1 comprises a system for determining demographic data. In the example shown, computing device 100 comprises a computing device for accessing a wireless communication system. In various embodiments, computing device 100 comprises a mobile phone, a smartphone, a tablet computer, a laptop computer, an embedded system (e.g., an embedded computing system for controlling hardware), or any other appropriate computing device. In some embodiments, computing device 100 comprises a mobile device. In some embodiments, computing device 100 has an associated device identifier. In some embodiments, the device identifier for computing device 100 comprises a fixed device identifier. In some embodiments, the device identifier for computing device 100 comprises a device identifier that changes on a regular basis (e.g., every day, every 3 days, every week, every month, every year, etc.). In various embodiments, the device identifier is set by the device manufacturer, by the wireless communication system service provider, by the user, or by any other appropriate entity. The wireless communication system comprises computing device 100, wireless transmitters (e.g., wireless transmitter 102, wireless transmitter 104, and wireless transmitter 106), network data server 108, and network 110. Computing device 100 communicates with network 110 via one or more wireless transmitters and network data server 108. In various embodiments, the wireless communication system comprises 1, 2, 5, 22, 100, 1222, 15000, 3,000,000, 30,000,000, millions, tens of millions, hundreds of millions, or any other appropriate number of computing devices. In various embodiments, the communication system comprises 1, 3, 7, 31, 45, 122, or any other appropriate number of wireless transmitters. In various embodiments, network 110 comprises a telephone network, a data network, a local area network, a wide area network, the Internet, or any other appropriate network. In some embodiments, network data server 108 determines a connection location for computing device 100 based on information from wireless transmitters (e.g., which wireless transmitters computing device 100 is communicating with, wireless communication signal strengths, etc.). In some embodiments, network data server 108 is associated with a mobile phone carrier network (e.g., a cellular network) that receives raw data regarding the location of devices associated with the network. In some embodiments, the connection location for computing device 100 comprises a maximum likelihood point and a radius. In some embodiments, a radius comprises a radius within which the device is very likely to be (e.g., the device has a 90% chance of being within the radius). Network data server 108 creates connection database 112 including connection records for connections by computing devices (e.g., computing device 100) to network 110. Connection records in connection database 112 comprise device identifiers (e.g., device identifiers associated with computing devices, e.g., computing device 100), connection locations (e.g., connection locations determined by network data server 108), and connection times (e.g., times associated with a connection). In some embodiments, there are many layers of servers involved in network data server 108 (e.g., one, two, five, six, etc. layers of servers involved), where different companies (e.g., a wireless carrier, a contractor working with a wireless carrier) perform data collection, data manipulation (e.g., refining of location and/or the addition of an anonymized identifier, etc.) before passing the data to the system. At various intervals (e.g., once a day, once a week, upon manual request, etc.), data from connection database 112 is transferred to demographic data processor 114 (e.g., via network 110). Data from connection database 112 comprises a set of connection records. Demographic data processor 114 processes the set of connection records to determine demographic data. In various embodiments, demographic data comprises census data, census-like data (e.g., vehicle age, lifestyle types, purchasing preferences, etc.), age data, income data, ethnicity data, gender data, user type data, heavy shopper data, stay-at-home parent data, commuter data, shopper with disposable income data, college student data, home location data, work location data, previous location data, next location data, visit frequency data, vehicle type data, transit type data, other trip location data, trip routine data, trip type data, competitor data, parental status, age of children, number of children, voting preferences, commute distance, or any other appropriate demographic data. In some embodiments, demographic data comprises demographic data associated with a location of interest. In some embodiments, demographic data processor 114 uses external demographic data (e.g., census data, census-like data, etc.) as part of determining demographic data. In some embodiments, demographic data processor 114 uses connection records in conjunction with demographic data to determine useful information regarding users' travel patterns and statistical data associated with the users based on associated locations (e.g., residence locations, work locations, shopping locations, etc.). Demographic data user 116 accesses demographic data from demographic data processor 114. In some embodiments, demographic data user 116 accesses raw demographic data from demographic data processor 114. In some embodiments, demographic data user 116 accesses prepared reports on demographic data from demographic data processor 114.

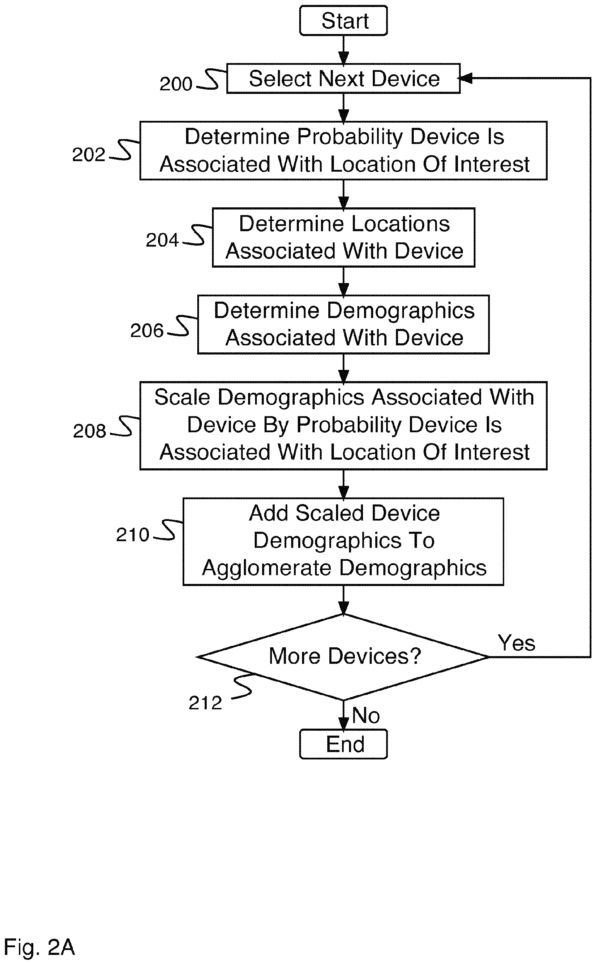

Figure 2A is a flow diagram illustrating an embodiment of a process for determining demographic data. In some embodiments, the process of Figure 2A is executed by demographic data processor 114 of Figure 1 for determining demographic data from a set of connection records. In some embodiments, the process of Figure 2A operates on a set of connection records sorted by device identifier. In some embodiments, connection records comprise records indicating device identifiers, connection locations, and/or connection times. In some embodiments, a connection location comprises a location probability distribution. In some embodiments, a location probability distribution comprises a maximum likelihood point and a radius. In some embodiments, a set of connection records sorted by device identifier comprises a data set comprising a set of device identifiers, a set of connection locations, and/or associated connection times for each device identifier. In some embodiments, connection records comprising an indeterminate connection location (e.g., where the connection location radius is larger than a threshold value) are discarded prior to the process of Figure 2A. In some embodiments, the radius threshold value for discarding a connection record varies according to location. In the example shown, the process of Figure 2A comprises a process for determining demographic data associated with a location of interest.

In 200, the next device is selected. In some embodiments, the next device comprises the first device. In some embodiments, selecting the next device comprises selecting a next device using an identifier.

In 202, the probability the device is associated with the location of interest is determined. In some embodiments, the probability that the device is associated with the location of interest comprises the probability that the device entered the location of interest. In some embodiments, determining the probability the device is associated with the location of interest comprises examining location data and determining whether the location data shows the device near the location of interest (e.g., a connection location shows the device near the location of interest). In some embodiments, the probability that the device is associated with the location of interest comprises the likelihood that the device passed within a threshold distance of the location of interest. In some embodiments, determining the probability the device is associated with the location of interest comprises examining location data and determining whether the location data shows the device passing by the location of interest (e.g., a connection location shows the device first on one side of the location of interest, and then on another side of the location of interest, with a likely path between the two going by the location of interest). In some embodiments, the probability the device is associated with the location of interest comprises a probability as a function of time (e.g., sometimes the device is not near the location of interest, so the probability is zero, but at certain times the device approaches the location of interest, and the probability rises above zero). In various embodiments, the time dependency of the probability the device is associated with the location of interest comprises a dependency on one or more of the following: hour, day, year, month, type of hour, type of day, and/or type of month (e.g., for example, a summer Tuesday, a rush hour, an average weekday, a winter month, paydays, a special event like an art-walk etc.). In some embodiments, the probability = 1 - (distance [device, location analyzed] / uncertainty radius)^2 when distance < cut off radius (e.g., Probability = 1 - (dist [device, location analyzed] / uncertainty radius)^2 when distance < cut off radius (e.g., 2000m, 500m, or any other appropriate cut off radius), otherwise (Probability = 0 otherwise).

In 204, locations associated with the device are determined. In various embodiments, locations associated with the device comprise one or more of a home location, a work location, a school location, a shopping location, an exercise location, a work-place location, a recreational location, a tourist location, a frequently-visited friend's home location, or any other appropriate location. In some embodiments, locations associated with the device are determined by examining device locations at location associated times. In some embodiments, locations associated with the device are determined by examining device location patterns.

In 206, demographics associated with the device are determined. In some embodiments, demographics associated with the device are determined by determining demographics associated with the home location or other locations of the device (e.g., the home location determined in 204). In some embodiments, demographics associated with the home location or other locations of the device are scaled by an appropriate scaling factor. In some embodiments, the scaling factor comprises a sum of the partial-population of each census block partially overlapped with a home location for this device / sum of the partial amounts of all devices whose home overlaps with this census block. In some embodiments, the scaling factor is computed as follows:

For each census block: C1
For each device's grid which overlapping with C1: G

```
        C1's factor = C1's census population / sum(% of G which
    overlaps with C1 * G's * G1's factor from 0029)
```

For each home grid cell of the device: G
For each census block which overlaps with G: C

```
        Device's factor = sum(% of G which overlaps with C1 * C1's
    factor * G1's factor from 0029)
```

In some embodiments, demographics associated with the device comprise a demographic probability distribution. In some embodiments, the demographic probability distribution comprises census or census-like data scaled by an appropriate scaling function (e.g. weighting function, etc.). In various embodiments, the census or census-like data comprises one or more of the following: age data, income data, ethnicity data, gender data, employment data, family status data, or any other appropriate data associated with residents or other users of a location.

In some embodiments, the demographic probability distribution comprises user type data. In various embodiments, the user type data comprises one or more of the following: heavy shopper data, stay at home parent data, commuter data, shopper with disposable income data, college student data, work location/commute habits, other mobility patterns, shopping patterns/favorite places, response of user behavior to external events, response or user behavior to weather, response or user behavior to gas prices, response or user behavior to economic factors, gender data, or any other appropriate data.

In 208, demographics associated with the device are scaled by the probability the device is associated with the location of interest. In some embodiments, the probability the device is associated with the location of interest comprises a function of time, and so the scaled demographics comprise a function of time. In some embodiments, the function comprises 1 - (1 / (usage ^ 2)). In some embodiments, the location of interest has a radius associated with it that does not shrink over time (e.g., in some cases it can grow or remain uncertain for example based on network properties - bounced signals, signals from a far off fall back tower, etc.).

In 210, the scaled device demographics are added to aggregate demographics. In some embodiments, the scaled demographics comprise a function of time, and so the aggregate demographics comprise a function of time. In some embodiments, a scale factor is proportional to (usage/sec by time component)*(average residency time in location in time component). In various embodiments, scaling demographics vary according to time - for example, Sunday vs. Tuesday, a typical Tuesday, a holiday, a sports game day (e.g., a Giants game, a baseball game, a football game, etc.),

a school day, a non-school day, a time within a day, a rush hour day, an evening at home day, a part of a day, or any other appropriate time segmenting. In various embodiments, the aggregate demographics comprise a home location probability distribution, a daytime location and/or work location probability distribution, a demographic data probability distribution, or any other appropriate probability distribution. In various embodiments, the demographic data comprises one or more of the following: census data, census-like data, age data, income data, ethnicity data, gender data, user type data, heavy shopper data, stay-at-home parent data, commuter data, shopper with disposable income data, college student data, or any other appropriate demographic data. In various embodiments, the time dependency of the aggregate demographics comprises a dependency on one or more of the following: hour, day, year, month, type of hour, type of day, and/or type of month (e.g., for example, a summer Tuesday, a rush hour, an average weekday, a winter month, paydays, a special event like an art-walk etc.). In 212, it is determined whether there are more devices. In the event there are more devices, control passes to 200. In the event there are not more devices, the process ends.

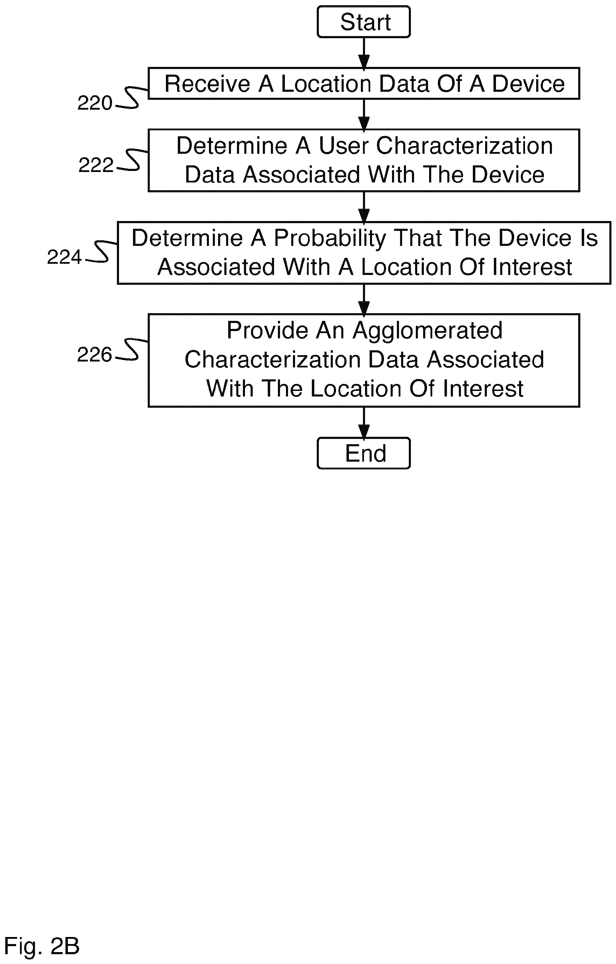

Figure 2B is a flow diagram illustrating an embodiment of a process for determining a demographic data. In some embodiments, the process of Figure 2B is executed by demographic data processor 114 of Figure 1 for determining demographic data. In the example shown, in 220, a location data of a device is received. In 222, a user characterization data associated with the device is determined. In 224, a probability that the device is associated with a location of interest is determined. In 226, an aggregated characterization data associated with the location of interest is provided.

In some embodiments, an aggregated characterization data comprises an accumulation of products. In some embodiments, each product of the accumulation of products comprises the product of the probability that one of the plurality of devices is associated with the location of interest with the user characterization data associated with the one of the plurality of devices. For example, the owner of a shopping mall is interested in the demographics of the traffic passing by a proposed new location. The probability that a device is associated with the location of interest comprises the probability that a person carrying the device passed by the new location, and the user characterization data comprises the probability that the person carrying the device passed by another shopping location of interest (e.g., a specific retail store such as Whole Foods™, Walmart™, Apple™ Store, Farmer's Markets, shopping malls, etc.). The aggregated characterization data comprises an average of products, wherein each product comprises the product of the probability that one of the plurality of devices is associated with the location of interest with the user characterization data associated with the one of the plurality of devices

In some embodiments, the user characterization comprises a demographic probability distribution. In some embodiments, the demographic probability data comprises census data scaled by an appropriate scaling function. In various embodiments, the census or census-like data comprises one or more of the following: age data, income data, ethnicity data, gender data, employment data, family status data, or any other appropriate census or census-like data. In some embodiments, the demographic probability distribution comprises user type data. In various embodiments, user type data comprises one or more of the following: heavy shopper data, stay at home parent data, commuter data, shopper with disposable income data, college student data, gender data, or any other appropriate user type data.

In some embodiments, the user characterization data comprises an associated location. In some embodiments, user characterization data comprising an associated location comprises an indication of a location associated with a user. In some embodiments, the location is one of a set of possible locations. In various embodiments, an associated location comprises one or more of the following: a specific retail location (e.g., Walmart, Whole Foods, etc.), a recreation location (e.g., a gym, a park, a paracourse, a sports venue, etc.), a school (e.g., a high school, a community college, a private college, etc.), a religious establishment, a social space (e.g., a bar, a park, a square, etc.), or any other appropriate associated location. In some embodiments, user characterization data comprising an associated location comprises an indication of one or more of a set of possible locations. In some embodiments, determining a user characterization data comprising an associated location comprises determining an associated location from a set of location data. In some embodiments, determining a user characterization data comprising an associated location comprises determining, from a set of location data, whether a user was at each of a set of possible locations. In some embodiments, determining a user characterization data comprising an associated location comprises determining, from a set of location data, the probability a user was at each of a set of possible locations. In some embodiments, determining a user characterization data comprising an associated location comprises examining each location in a set of location data and determining the probability that the location comprises one of a set of possible locations.

In some embodiments, the user characterization data comprises a visit frequency. In some embodiments, user characterization data comprising a visit frequency comprises a number of times a location of interest was visited over a given time period. In various embodiments, the time period comprises a day, a week, a month, or any other appropriate time period. In various embodiments, the time period comprises a time period in a day type such as a typical weekday, a weekend day, a commute day, a weekday afternoon when it is sunny, a weekday afternoon when it is foggy, a school day, a non-school day, a school holiday day, a early release day, or any other appropriate day type for data analysis. In some embodiments, determining a user characterization comprising a visit frequency comprises determining, from a set of location data, the number of times a location of interest was visited. In some embodiments, determining a user characterization comprising a visit frequency comprises examining each location in a set of location data and determining the probability that the location comprises the location of interest.

In some embodiments, the user characterization data comprises a visit unusualness. In some embodiments, user characterization data comprising a visit unusualness comprises a metric for how unusual the visit was for the user. In some embodiments, demographic data is used to develop the coefficients of likelihood for each site type/frequency pair and demographic combination. For example, a neural net is trained and a histogram is made for each site type, the type of the location is determined based on a database lookup (e.g., a yellow pages, etc.), the type of location determined based on the probability associated with the stay and the probability associated with the type of location (e.g., stay is longer at a hair salon, but maybe shorter at an automatic teller location).

In some embodiments, the user characterization data comprises a trip type. In some embodiments, user characterization data comprising a trip type comprises an indication of the purpose of the trip the user was taking when the location of interest was visited. In some embodiments, trip type is derived from the combination of site type and trip duration. In various embodiments, trip types comprise one of the following: shopping, grocery shopping, pick-some-else-up, school, work, work-related but out of the office, medical appointment, dining out, social, or any other appropriate trip type.

In some embodiments, the user characterization data comprises competing establishments or other establishments along the route recently. In some embodiments, user characterization data comprising competing establishments or other establishments along the route recently comprises an indication of the competing establishments or other establishments seen on the trip when the location of interest was visited. In some embodiments, once you've found the competing establishments or other establishments, the likelihood is calculated that the device was in the presence of the competitor or other establishment, then the likelihood is aggregate for all the devices at the location of interest. In some embodiments, all establishments are found within an interest radius which have the same Site Type and/or are within or of the same Industry (e.g., all gas stations near my gas station).

In some embodiments, the user characterization data comprises a preceding action. In some embodiments, user characterization data comprising a preceding action comprises an indication of the action of the user prior to visiting the location of interest. In some embodiments, the preceding action comprises a preceding location visited. In various embodiments, the preceding action comprises one or more of the following: leaving home, leaving school, shopping, exercise, running an errand, having lunch, having a meal, and/or having dinner. In some embodiments, the preceding action is calculated using the combination of the previous site type and/or trip type with the current location's site type.

In some embodiments, the user characterization data comprises a following action. In some embodiments, user characterization data comprising a following action comprises an indication of the action of the user after visiting the location of interest. In some embodiments, the following action comprises a following location visited. In various embodiments, the following action comprises one or more of the following: arriving home, arriving at school, shopping, exercise, having lunch, and/or having dinner. In some embodiments, the following action is calculated using the combination of the following site type and/or trip type with the current location's site type. Note that the data is processed post facto so the system is aware of the next location at the time of calculation.

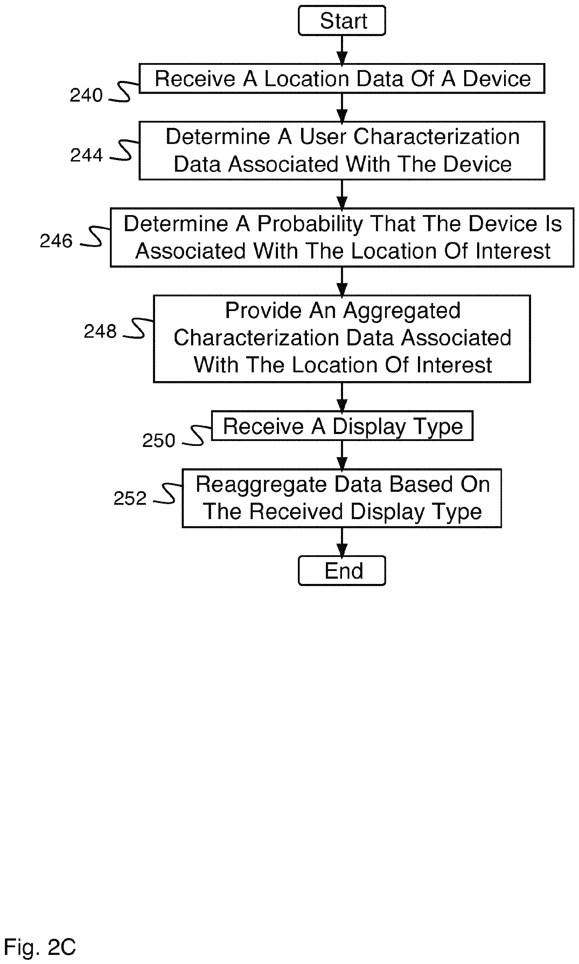

Figure 2C is a flow diagram illustrating an embodiment of a process for displaying a demographic data. In the example shown, in 240, a location data of a device is received. In 244, a user characterization data associated with the device is determined. In 246, a probability that the device is associated with the location of interest is determined. In 248, an aggregated characterization data associated with the location of interest is provided. In 250, a display type is received. In 252, data is reaggregated based on the received display type. In some embodiments, the reaggregated data is provided to a display for display (e.g., data in the form for display as a table, as a graph, as on a map, etc.).

In various embodiments, the display type comprises a graph of data versus time, a fractional data breakdown, a map, or any other appropriate display type. In some embodiments, in a graph of data versus time, the data comprises a number of visitors to a location of interest. In some embodiments, in a graph of data versus time, the data comprises the subset of visitors to a location of interest of a demographic of interest. In some embodiments, the subset of visitors to a location of interest of a demographic of interest comprises the fraction of the visitors to the location of interest that are members of the demographic of interest. In some embodiments, in a fractional data breakdown, the data comprises visitors to a location of interest. In some embodiments, in a fractional data breakdown, the fractional data breakdown comprises a fractional data breakdown by demographic types of interest. In some embodiments, in a display type comprising a map, the map displays an intensity or density of visitors associated with the location of interest. In various embodiments, in a display type comprising a map, the intensity or the density is associated with a home location, a work location, a school location, a shopping location, an exercise location, a work-place location, a recreational location, a tourist location, a frequently-visited friend's home location, or any other appropriate location. In some embodiments, the map displays changes in visitor characteristics based at least in part on an external factor. In various embodiments, the external factor comprises one or more of the following: a time, a weather condition, an event, or any other appropriate external factor.

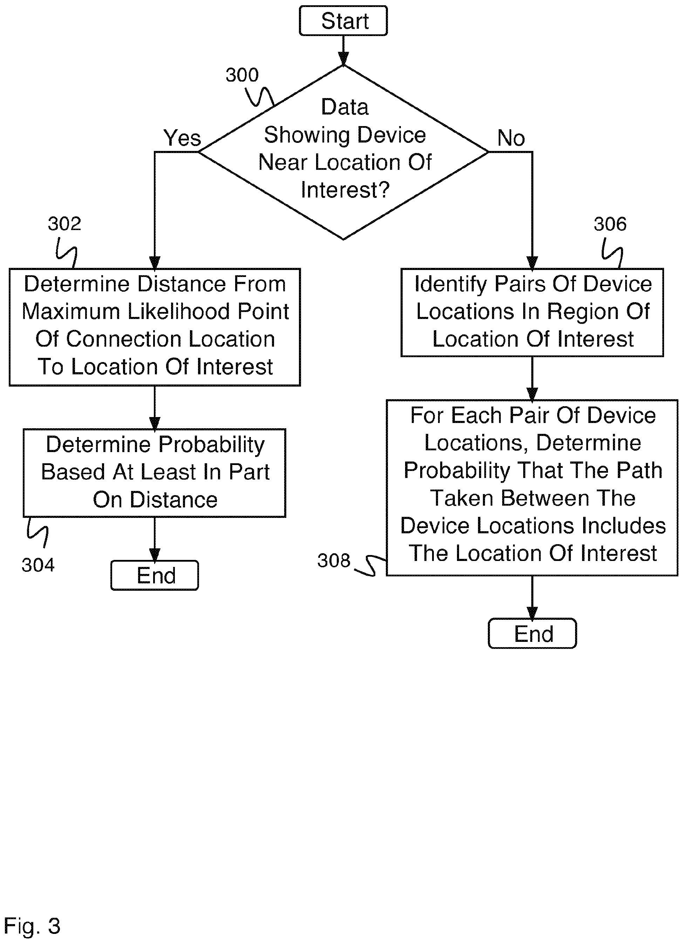

Figure 3 is a flow diagram illustrating an embodiment of a process for determining the probability a device is associated with a location of interest. In some embodiments, if it is known a device 'IS' at the location (e.g., time determined to be stationary at location), this takes precedence over inferring that it might have passed by based on travel inference or habits. In some embodiments, there are two separate metric categories: "who stays there" and "who passes by". In some embodiments, how long a device or user associated with the device stays at a given location is one of the user characteristics; for example, if it is a really short time (e.g. 1 minute), they're essentially passing by. In various embodiments, the system's estimate of how long they stayed there is another probability function based on the presence of the device, the characterization/known patterns of the place and the size of the location of interest, or any other appropriate manner of determining the length of stay. In some embodiments, the process of Figure 3 implements 202 of Figure 2A. In the example shown, in 300, it is determined whether there is data showing the device near the location of interest. In some embodiments, data showing the device near the location of interest comprises a connection record including a connection location radius including the location of interest (e.g., the location of interest is within the circle indicated by the connection location maximum likelihood point and the connection location radius). In the event it is determined that there is data showing the device near the location of interest, control passes to 302. In 302, the distance from the maximum likelihood point of the connection location to the location of interest is determined. In 304, the probability the device was at the location of interest is determined based at least in part on the distance determined in 302. In some embodiments, the probability is determined by looking up the distance in a probability table. In some embodiments, a distance metric is determined to be the ratio of the difference between the connection location radius and the distance determined in 302 with the connection location radius. In some embodiments, the likelihood is a function of the connection and locational accuracy characteristics of all devices in that region (or, conversely, a function of tower and network characteristics in that region). For example, a signal may bounce off of a hill so that locations are offset in one direction (e.g., to the east by an amount in a region where the bouncing is occurring). The distance metric is zero when the distance determined in 302 is equal to the connection location radius (e.g., the location of interest is on the very edge of the circle). The distance metric is one when the distance determined in 302 is zero (e.g., the location of interest is at the connection maximum likelihood point). The probability is determined to be 1 minus 1 divided by the square of the distance metric (e.g., taking into account the area of the circle rather than the distance on a single line from center to edge).

In the event it is determined in 300 that there is not data showing the device near the location of interest, control passes to 306. In 306, pairs of device locations in the region of the location of interest are identified. In some embodiments, pairs of device locations in the region of the location of interest comprise pairs of connection records closely spaced in time with at least one connection location within a threshold distance of the location of interest. In some embodiments, pairs of device locations in the region of the location of interest comprise pairs of connection records closely spaced in time with a path between the device locations passing within a threshold distance of the location of interest. In some embodiments, closely spaced in time comprises within a threshold time difference. In 308, for each pair of device locations, the probability that the path taken between the device locations includes the location of interest is determined. In some embodiments, the probability that the path taken between the device locations includes the location of interest is determined by determining a set of reasonable paths between the device locations (e.g., the five shortest paths, the ten paths that on average take the least time, etc.) determining which of the reasonable paths pass by the location of interest, then determining the probability that each reasonable path that passes by the location of interest was taken. In various embodiments, determining the probability that a reasonable path was taken comprises evaluating the time that a path takes, typical paths for the device user, actual road speed at the time in question, actual road volume at the time in question, or evaluating any other appropriate criteria. The probability that the user passed by the location of interest comprises the probability that the path he took between a pair of device locations took him by the location of interest.

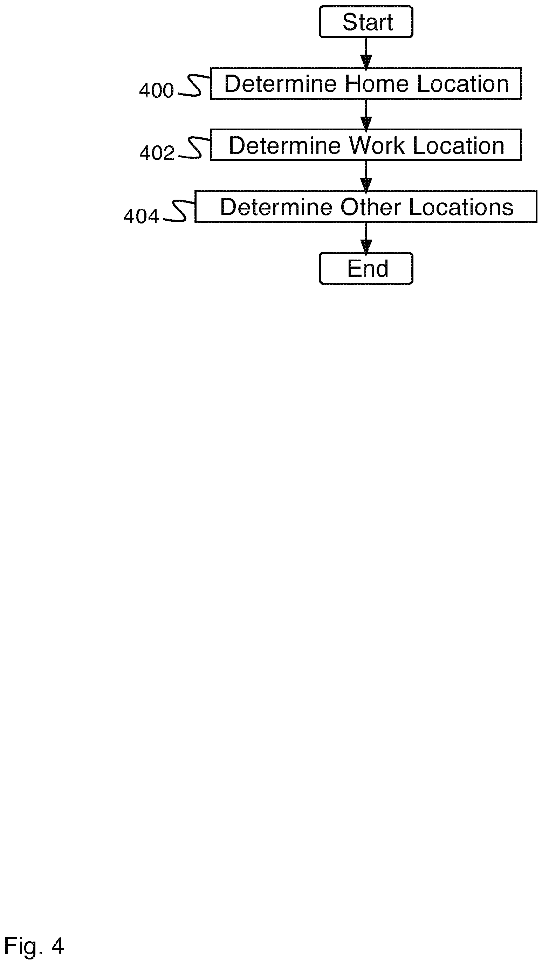

Figure 4 is a flow diagram illustrating an embodiment of a process for determining locations associated with a device. In some embodiments, the process of Figure 4 implements 204 of Figure 2A. In the example shown, in 400, a home location is determined. In some embodiments, a home location is determined based at least in part on connection locations at home-associated times (e.g., at night). In 402, a work location is determined. In some embodiments, a work location is determined based at least in part on connection locations at work-associated times (e.g., at midday). In 404, other locations are determined. In various embodiments, other locations comprise school locations, exercise locations, shopping locations, a work-place location, a recreational location, a tourist location, a frequently-visited friend's home location, or any other appropriate locations. In some embodiments, other locations are determined based at least in part on connection locations at appropriate times. In some embodiments, other locations are determined in other appropriate ways (e.g., a user always exercises between work and home, a user regularly goes to a known shopping center location, etc.).

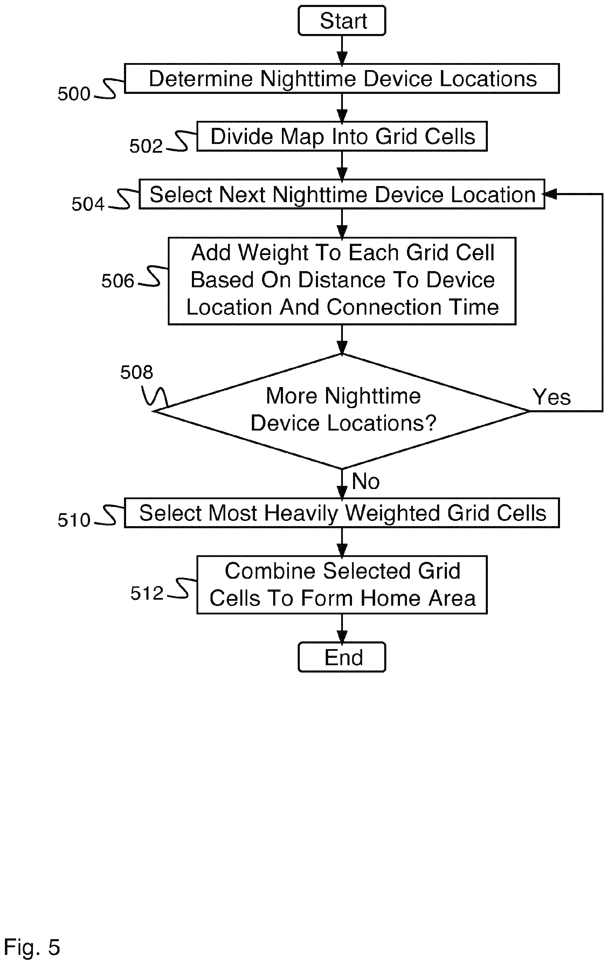

Figure 5 is a flow diagram illustrating an embodiment of a process for determining a home location. In some embodiments, the process of Figure 5 implements 400 of Figure 4. In the example shown, in 500, nighttime device locations are determined (e.g., nighttime device locations for a given user). In some embodiments, determining nighttime device locations comprises determining device locations at a particular time in the middle of the night (e.g., 4 AM). In some embodiments, determining nighttime device locations comprises selecting connections made at any point in a nighttime range (e.g., 9 PM - 7 AM). In 502, a map of the area is divided into grid cells. In some embodiments, grid cells comprise small discrete areas (e.g., city blocks or 1 kilometer squares) on which to evaluate the probability of an area being a user's home location. In 504, the next nighttime device location is selected. In some embodiments, the next nighttime device location comprises the first nighttime device location. In 506, weight is added to each grid cell based on the distance to the device location and connection time. In some embodiments, each grid cell within the connection radius associated with the nighttime device location receives an amount of weight related to the connection time. In some embodiments, grid cells closer to the maximum likelihood point receive more weight. In 508, it is determined whether there are more nighttime device locations. In the event there are more nighttime device locations, control passes to 504. In the event there are not more nighttime device locations, control passes to 510. In 510, the most heavily weighted grid cells are selected. In various embodiments, the one most heavily weighted grid cell is selected, the five most heavily weighted grid cells are selected, the top 1% most heavily weighted grid cells are selected, the top 20% most heavily weighted grid cells are selected, or any other appropriate most heavily weighted grid cells are selected. In 512, the selected grid cells are combined to form the home area. In some embodiments, different components of the home area have different likelihood weights. So, for example, a left-hand side could be more likely than a right-hand side but both are still in the home area. In some embodiments, the most likely cell (e.g., the heavily weighted cell) comprises the cell in which the user lives. In some embodiments, a cell is 100 meters by 100 meters. In some embodiments, up to 5 cells are picked for the home area.

In various embodiments, a process similar to Figure 5 is used with regard to daytime locations, workplace, or any other appropriate location. In some embodiments, a day time location is indicative of a user's workplace.

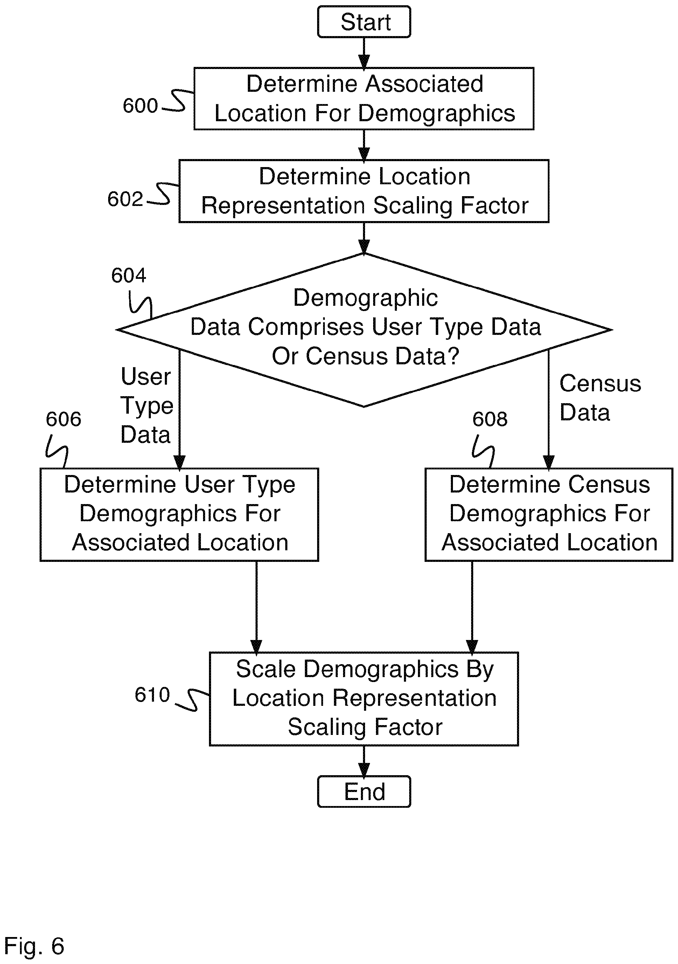

Figure 6 is a flow diagram illustrating an embodiment of a process for determining demographics associated with a device. In some embodiments, the process of Figure 6 implements 206 of Figure 2A. In the example shown, in 600, an associated location for demographics is determined. In various embodiments, an associated location for demographics comprises a home location, a work location, an exercise location, or any other appropriate location. In 602, a location representation scaling factor is determined. In some embodiments, a location representation scaling factor comprises a scaling factor accounting for the fact that the not all people associated with the associated location for demographics have data associated with them (e.g., the set of connection records comprises customers of one or more cellular service providers, which comprises a subset of the total population). In 604, it is determined whether the demographic data comprises user type data or census or census-like data. In some embodiments, user type data comprises derived data (e.g., derived by the system for determining demographic data) describing characteristics of a user. In various embodiments, user type data comprises one or more of the following: heavy shopper data, stay at home parent data, commuter data, shopper with disposable income data, college student data, gender data, or any other appropriate user type data. In some embodiments, census data comprises received data describing quantitative user statistics. In various embodiments, the census data comprises one or more of the following: age data, income data, ethnicity data, gender data, employment data, education, household composition, political preferences, buying habits, immigration, language spoken at home, family status data, or any other appropriate data. In the event the demographic data comprises user type data, control passes to 606. In 606, user type demographics are determined for the associated location. In some embodiments, user type demographics are determined from a user type demographic database built by the system for determining demographic data. In some embodiments, a user type demographic database is built by determining a user type and an associated location (e.g., a home location) for each user and building a set of user type statistics for each location (e.g., the proportions of each user type for each location. In some embodiments, the user types are determined using the site type/visit frequency tables to assign probabilities for the user type. In some embodiments, the user type is based at least in part on the user demographics. Control then passes to 610. In the event it is determined in 604 that demographic data comprises census data, control passes to 608. In 608, census demographics are determined for the associated location. In some embodiments, census demographics are determined from a database of census data. In some embodiments, a database of census data received from an external source (e.g., the census board or another appropriate external supplier of demographic information). Control then passes to 610. In 610, the demographics are scaled by the location representation scaling factor. In some embodiments, the process of Figure 6 uses census-like data instead of or in addition to census data.

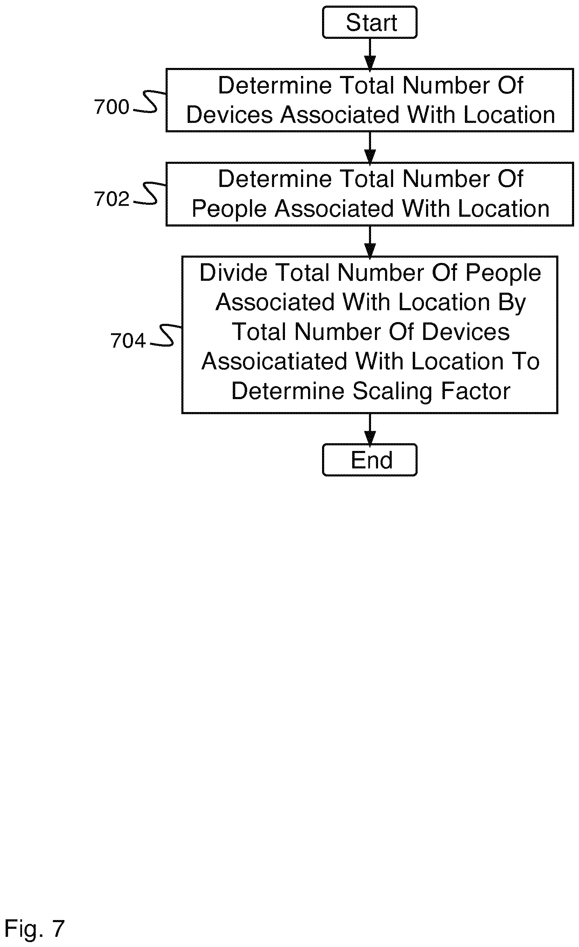

Figure 7 is a flow diagram illustrating an embodiment of a process for determining a location representation scaling factor. In some embodiments, the process of Figure 7 implements 602 of Figure 6. In the example shown, in 700, the total number of devices associated with the location is determined (e.g., where the location is a home location, the total number of devices with the location as home location is determined). In 702, the total number of people associated with the location is determined (e.g., where the location is a home location, the total number of people living at the location is determined, e.g., via census data). In 704, the total number of people associated with the location is divided by the total number of devices associated with the location to compute the scaling factor (e.g., to determine how many people are represented by each device).

In some embodiments, the process of Figure 7 is performed for other location types using census-like data. For example, worker count data is used for work locations.

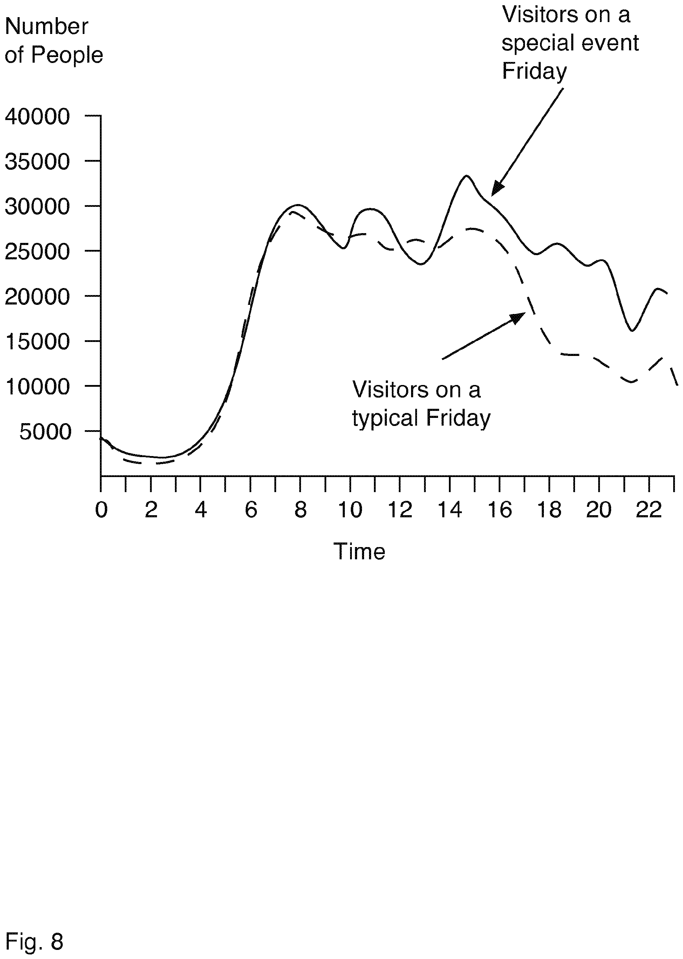

Figure 8 is a line graph illustrating a comparison between the number of visitors to an area on a typical Friday and a special event Friday. In some embodiments, the graph of Figure 8 was obtained using the process of Figure 2A to determine the number of people in an area as a function of time. In various embodiments, the process of Figure 2A can be used to break down the data shown in Figure 8 into home locations of visitors to the area, work locations of visitors to the area, demographics of visitors to the area (e.g., race, gender, income, age, education, family status, shopping habits, etc.) or into any other appropriate subgroup. Subgroup data can then be plotted versus time in a similar way as the graph of Figure 8.

In the example shown, on a typical Friday, the number of people in the area stays significantly higher through the evening (e.g., at 7 PM) than overnight (e.g., at 2 AM), indicating that the area is popular for nightlife. However, the number of people is even higher during working hours, indicating that the area is primarily used for business and nightlife is secondary. On a special event Friday, the population through the evening is comparable to during a typical workday, nearly twice that of a typical Friday evening, indicating a large number of people come to the area for the special event. The peak population on the special event Friday occurs at approximately 3 PM, potentially due to the overlap between people arriving at the event and people remaining in the area for work. The evening population drops off sharply starting at 8 PM, potentially indicating the event is an art gallery-based event, as 8 PM is a typical time for art galleries to close.

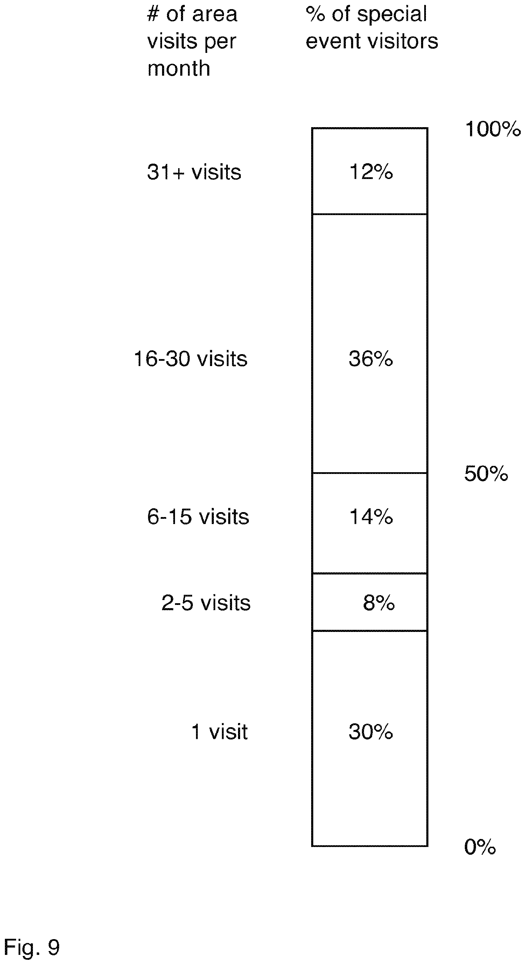

Figure 9 is a stacked bar graph illustrating data describing visitors to an area during a special event. In the example shown, the stacked bar graph of Figure 9 shows the fractions of visitors to an area during a special event that visit the area different numbers of times per month. In some embodiments, the graph of Figure 9 was obtained using the process of Figure 2A to determine the number of people in an area and the total number of times they visited over the course of a month. In various embodiments, the process of Figure 2A can be used to break down the data shown in Figure 9 into home locations of visitors to the area, work locations of visitors to the area, demographics of visitors to the area (e.g., race, gender, income, age, education, family status, shopping habits, etc.) or into any other appropriate subgroup. Subgroup data can then be shown in a stacked bar graph in a similar way as the graph of Figure 9.

In the example shown, 30% of the visitors to the area during the event visit only once per month (e.g., for the event). These visitors represent the people drawn to the area specifically for the event, and demonstrate the economic benefit to the area of holding the special event. Thirty-six percent of visitors visit the area 16-30 times per month, and thus likely work in the area, and 12% of visitors visit 31 or more times per month, and thus likely live in the area. The remaining 22% of visitors who visit either 2-5 or 6-15 times per month likely live in the vicinity, but are brought to the area specifically for the event. We can deduce that fully 50% of people in the area were brought there for the event, while the other 50% are regular visitors that would likely have been in the area anyway.

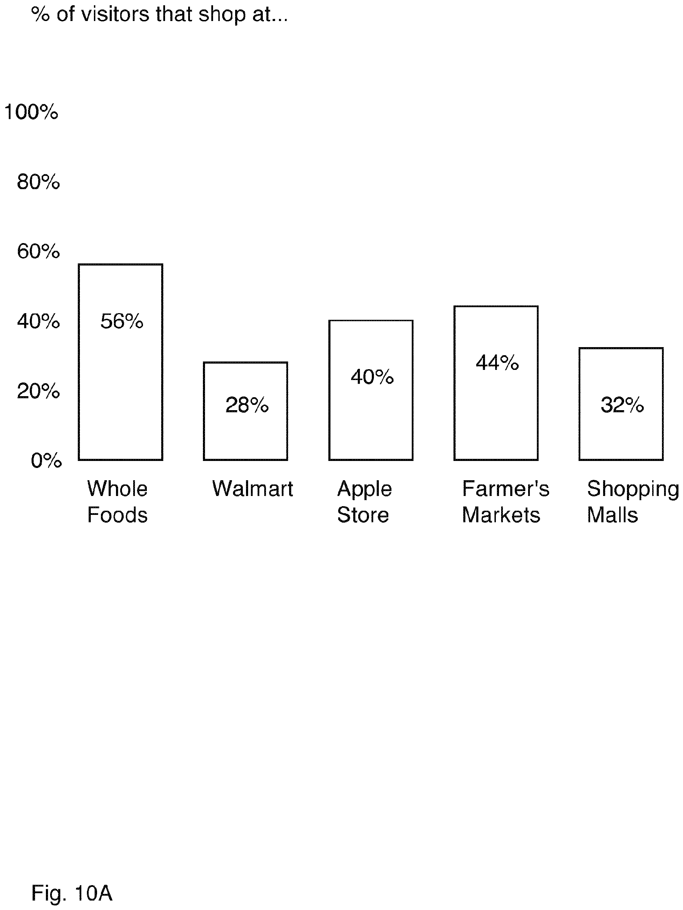

Figure 10A is a bar graph illustrating data describing demographics of visitors to an area. In the example shown, the bar graph of Figure 10A shows the fraction of visitors to an area that shop at various different stores. In some embodiments, the graph of Figure 10A was obtained using the process of Figure 2A to determine whether people visiting the area were also seen at various shopping locations. In various embodiments, the process of Figure 2A can be used to break down the data shown in Figure 10A into home locations of visitors to the area, work locations of visitors to the area, other demographics of visitors to the area (e.g., race, gender, income, age, education, family status, etc.) or into any other appropriate subgroup. Subgroup data can then be shown in a bar graph in a similar way as the graph of Figure 9. In the example shown, a large fraction of the population is seen to shop at Whole Foods, indicating that they potentially have disposable income, and at farmer's markets, indicating that the have concern about food quality and supporting their community. A relatively low fraction of visitors are seen to shop at Walmart. A businessman considering opening a new grocery market would be wise to take this information into account.

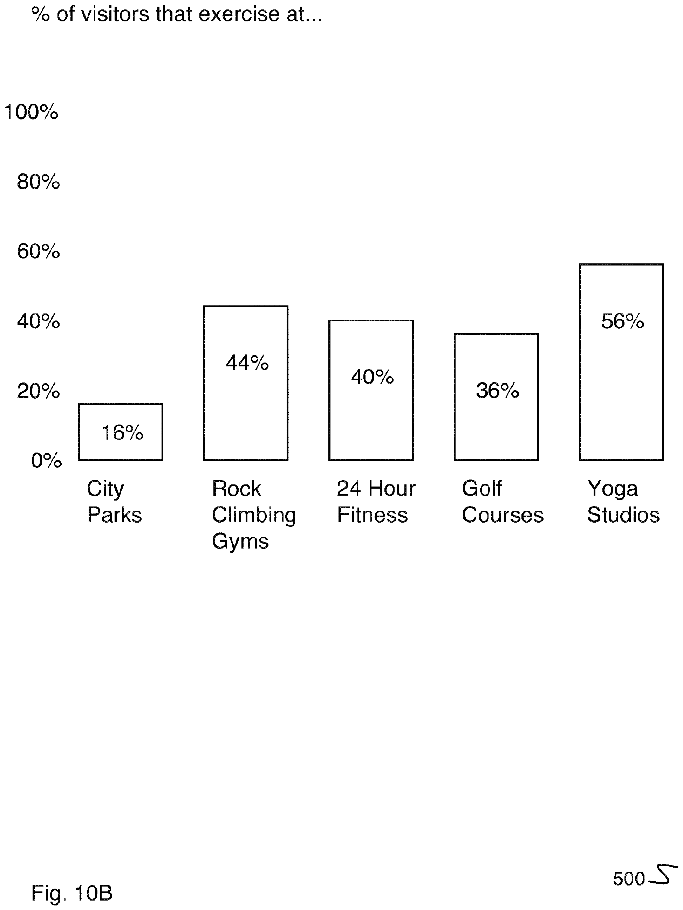

Figure 10B is a bar graph illustrating data describing demographics of visitors to an area. In the example shown, the bar graph of Figure 10A shows the fraction of visitors to an area that exercise at various different locations. In some embodiments, the graph of Figure 10A was obtained using the process of Figure 2A to determine whether people visiting the area were also seen at various exercise locations. In various embodiments, the process of Figure 2A can be used to break down the data shown in Figure 10A into home locations of visitors to the area, work locations of visitors to the area, other demographics of visitors to the area (e.g., race, gender, income, age, education, family status, etc.) or into any other appropriate subgroup. Subgroup data can then be shown in a bar graph in a similar way as the graph of Figure 9. In the example shown, a large fraction of people are seen to use a number of demographically different exercise locations, including rock climbing gyms, 24 Hour Fitness™ locations, golf courses, and yoga studios. Only city parks are not well utilized by the population. The high demand for exercise locations and low usage of city parks potentially indicates that the parks are seen as undesirable locations to exercise, and investments made by the city to fix this would be appreciated by the population.

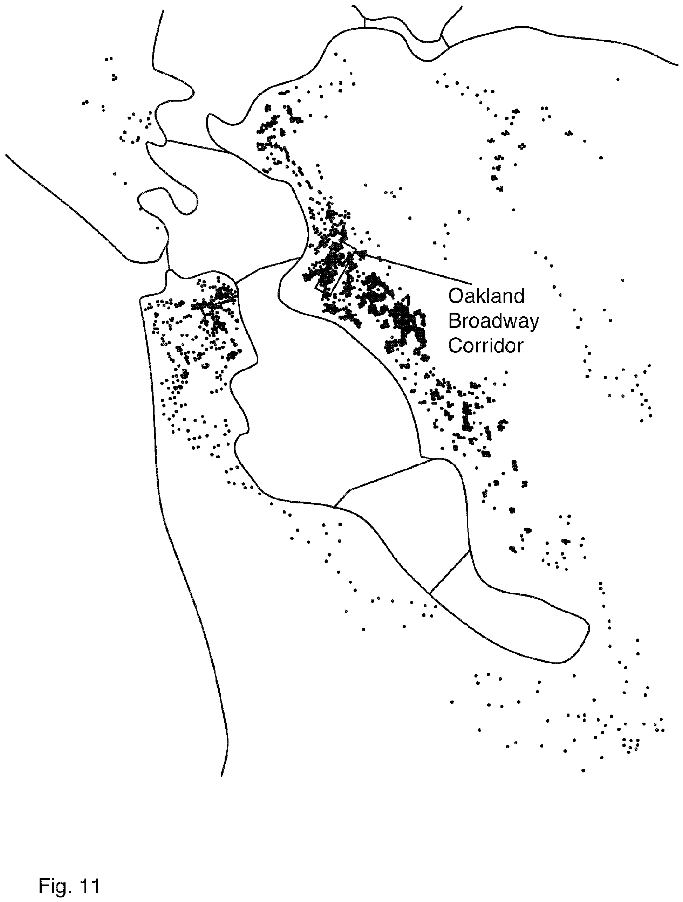

Figure 11 is a map illustrating data describing home locations of all visitors to a location of interest in a given month. In the example shown, the location of interest comprises the Oakland Broadway Corridor, indicated by a rectangle describing its approximate area. Each dot indicates the home location of approximately 500 visitors to the Broadway Corridor. In some embodiments, the map of Figure 11 was obtained using the process of Figure 2A to determine the home locations of visitors to the area. In various embodiments, the process of Figure 2A can be used to break down the visitors shown in Figure 11 into, work locations of visitors to the area, demographics of visitors to the area (e.g., race, gender, income, age, education, family status, shopping habits, etc.) or into any other appropriate subgroup. The data of Figure 11 indicate that that visitors to the Oakland Broadway Corridor include a wide cross-section of bay area residents, living in all the different places bay area residents live. A large portion of San Francisco is represented, demonstrating that many people who live in San Francisco head east for work or play, rather than the bay traversals comprising solely east bay residents who travel to the city.

In various embodiments, the process of Figure 2A can be used to determine, and the graph types shown in Figure 8, Figure 9, Figure 10A, Figure 10B, and Figure 11 can be used to show, home locations of visitors to an area, work locations of visitors to an area, demographics of visitors to an area (e.g., race, gender, income, age, education, family status, shopping habits, etc.), trip origins (e.g., where visitors were before visiting the area), subsequent locations (e.g., where visitors went to after visiting the area), trip distributions (e.g., fraction of trips that are short, fraction of trips that are long, etc.), shopping locations visited, average number of visitors (e.g., per hour, per day, weekday vs. weekend, typical day vs. special event day, etc.), demographics of cars that pass by a location (e.g., make, model, year, etc.), number of vehicles that pass by with good visibility to an area, number of vehicles parked within walking distance to an area, transit demographics (e.g., travel by car, travel by rail, travel by food, travel by bicycle, travel by bus, etc.), visit frequency (e.g., number of visitors that visit once per week, number of visitors that visit twice a day, frequency of first-time visitors, etc.), trip unusualness (e.g., number of visitors that come as part of their daily routine, number of visitors that depart their daily routine to visit the location, number of visitors that do not have a daily routine, etc.), trip type (e.g., shopping, commute, recreation, etc.), business competitors seen along typical routes to the location, before actions (e.g., what a visitor was doing before visiting the location), after actions (e.g., what a visitor was doing after visiting the location), or any other appropriate visitor metrics.

Although the foregoing embodiments have been described in some detail for purposes of clarity of understanding, the invention is not limited to the details provided. There are many alternative ways of implementing the invention. The disclosed embodiments are illustrative and not restrictive.

**Claims**

1. A system for displaying a demographic data, comprising:

    an input interface configured to:

        receive a location data (240) of a device (100) from the device (100) itself;
        receive a display type for controlling a display to display the location data as a graph of data versus time, as a fractional data breakdown by demographic types of interest, or as a map displaying an intensity or density of visitors associated with a location of interest;
    a processor (114) configured to:

        determine a user characterization data (244) associated with the device, the user characterization data includes an associated location, a visit frequency, a visit unusualness, competing establishments along a route recently, a preceding action, a following action, or any combination thereof, wherein the associated location comprises one or more of the following: a specific retail location, a recreation location, a school, a religious establishment, or a social space; and
        determine, based on the location data, a probability that the device (100) has passed by a certain location of interest; and

    an output interface configured to:

        provide, based on the location data, an aggregated characterization data (248) associated with the location of interest for display according to the display type (252), wherein the aggregated characterization data includes an accumulation of products or
        an average of products, a product of the accumulation of products or of the average of products comprising the product of the probability that one of a plurality of devices has passed by the location of interest with the user

        characterization data associated with the one of the plurality of devices, wherein the display type comprises A) a graph of data versus time, the data comprising a number of visitors to a location of interest or the fraction of visitors to a location of interest of a demographic of interest, the fraction comprising a weighted sum of demographic data, or B) a fractional data breakdown by demographic types of interest, and the fractional data comprises visitors to a location of interest, the fractional breakdown comprising a weighted sum of demographic data; and
wherein the providing of the aggregated characterization data comprises to:

display an intensity or density of visitors associated with the location of interest, wherein the intensity or the density is associated with a location, the location relating to a home location or a work location, wherein the location is determined based on the following:

determine (500) locations of the device (100) during a preset time range;
divide (502) an area relating to the location data of the device (100) into a grid of a plurality of cells;
select (504) a next location of the device (100) during the preset time range;
add weights (506) to the plurality of cells based at least in part on a distance to the selected location of the device (100) and connection time of the device (100);
determine whether there are more device locations; and

in response to a determination that there are no more device locations:

select a set of the most heavily weighted grid cells; and
combine (512) the set of the most heavily weighted grid cells to form a preset area, comprising to: identify the preset area as the work location or the home location depending on whether the preset time range is associated with a first preset time range or a second preset time range, respectively, wherein the first preset time range relates to day time, wherein the second preset time range relates to night time.

2. The system as in claim 1, wherein the map displays changes in visitor characteristics based at least in part on an external factor, which comprises one or more of the following: a time, a weather condition, or an event.

3. The system as in claim 1 wherein the weights comprise the probability that the device (100) has passed by a location of interest and the probability that the device (100) is associated with the user characterization data.

4. A method for displaying a demographic data, comprising:

receiving a location data (240) of a device (100) from the device (100) itself;
receiving a display type for controlling a display to display the location data as a graph of data versus time, as a fractional data breakdown by demographic types of interest, or as a map displaying an intensity or density of visitors associated with a location of interest;
determining (244), using a processor (114), a user characterization data associated with the device (100), the user characterization data includes an associated location, a visit frequency, a visit unusualness, competing establishments along a route recently, a preceding action, a following action, or any combination thereof, wherein the associated location comprises one or more of the following: a specific retail location, a recreation location, a school, a religious establishment, or a social space;
determining, based on the location data, a probability that the device (100) has passed by a location of interest; and
providing, based on the location data, an aggregated characterization data (248) associated with the location of interest for display according to the display type (252), wherein the aggregated characterization data includes an accumulation of products or an average of products, a product of the accumulation of products or of the average of products comprising the product of the probability that one of a plurality of devices has passed by the location of interest with the user characterization data associated with the one of the plurality of devices, wherein the display type comprises A) a graph of data versus time, the data comprising a number of visitors to a location of interest or the fraction of visitors to a location of interest of a demographic of interest, the fraction comprising a weighted sum of demographic data, or B) a fractional data breakdown by demographic types of interest, and the fractional data comprises visitors to a location of interest, the fractional data breakdown comprising a weighted sum of demographic data; and

wherein the providing of the aggregated characterization data comprises:
displaying an intensity or density of visitors associated with the location of interest, wherein the intensity or the density is associated with a location, the location relating to a home location or a work location, wherein the location is determined based on the following:

determining (500) locations of the device (100) during a preset time range;

dividing (502) an area relating to the location data of the device (100) into a grid of a plurality of cells;

selecting (504) a next location of the device (100) during the preset time range;

adding weights (506) to the plurality of cells based at least in part on a distance to the selected location of the device (100) and connection time of the device (100);

determining whether there are more device locations; and

in response to a determination that there are no more device locations:

selecting a set of the most heavily weighted grid cells; and

combining (512) the set of the most heavily weighted grid cells to form a preset area, comprising:

identifying the preset area as the work location or the home location depending on whether the preset time range is associated with a first preset time range or a second preset time range, respectively, wherein the first preset time range relates to day time, wherein the second preset time range relates to night time.

5. A computer program product for displaying a demographic data, the computer program product being embodied in a tangible computer readable storage medium and comprising computer instructions for:

receiving a location data (240) of a device (100) from the device (100) itself;

receiving a display type for controlling a display to display the location data as a graph of data versus time, as a fractional data breakdown by demographic types of interest, or as a map displaying an intensity or density of visitors associated with a location of interest;

determining a user characterization data (244) associated with the device (100), the user characterization data includes an associated location, a visit frequency, a visit unusualness, competing establishments along a route recently, a preceding action, a following action, or any combination thereof, wherein the associated location comprises one or more of the following: a specific retail location, a recreation location, a school, a religious establishment, or a social space;

determining, based on the location data, a probability that the device (100) has passed by a location of interest; and

providing, based on the location data, an aggregated characterization data (248) associated with the location of interest for display according to the display type (252), wherein the aggregated characterization data includes an accumulation of products or an average of products, a product of the accumulation of products or of the average of products comprising the product of the probability that one of a plurality of devices has passed by the location of interest with the user characterization data associated with the one of the plurality of devices, wherein the display type comprises A) a graph of data versus time, the data comprising a number of visitors to a location of interest or the fraction of visitors to a location of interest of a demographic of interest, the fraction comprising a weighted sum of demographic data, or B) a fractional data breakdown by demographic types of interest, and the fractional data comprises visitors to a location of interest, the fractional data breakdown comprising a weighted sum of demographic data; and

wherein the providing of the aggregated characterization data comprises:

displaying an intensity or density of visitors associated with the location of interest, wherein the intensity or the density is associated with a location, the location relating to a home location or a work location, wherein the location is determined based on the following:

determining (500) locations of the device (100) during a preset time range;

dividing (502) an area relating to the location data of the device (100) into a grid of a plurality of cells;

selecting (504) a next location of the device (100) during the preset time range;

adding weights (506) to the plurality of cells based at least in part on a distance to the selected location of the device (100) and connection time of the device (100);

determining whether there are more device locations; and

in response to a determination that there are no more device locations:

selecting a set of the most heavily weighted grid cells; and

combining (512) the set of the most heavily weighted grid cells to form a preset area, comprising:

identifying the preset area as the work location or the home location depending on whether the preset time range is associated with a first preset time range or a second preset time range, respectively, wherein the first preset time range relates to day time, wherein the second preset time range relates to night time.

**Patentansprüche**

1. System zum Darstellen von demografischen Daten, umfassend:

   eine Eingangsschnittstelle, die zu Folgendem konfiguriert ist:

   Empfangen von Standortdaten (240) eines Geräts (100) von dem Gerät (100) selbst;
   Empfangen eines Anzeigetyps zum Steuern einer Anzeige zum Darstellen der Standortdaten als ein Graph von Daten über die Zeit, als eine anteilsmäßige Datenzerlegung nach demografischen Typen von Interesse, oder als eine Karte, die eine Intensität oder Dichte von Besuchern darstellt, die mit einem Standort von Interesse assoziiert sind;
   einen Prozessor (114), der zu Folgendem konfiguriert ist:

   Bestimmen von mit dem Gerät assoziierten Benutzer-Charakterisierungsdaten (244), wobei die Benutzer-Charakterisierungsdaten einen assoziierten Standort, eine Besuchsfrequenz, eine Unüblichkeit des Besuchs, im Wettbewerb stehende Etablissements entlang einer jüngst genommenen Route, eine vorangegangene Aktion, eine folgende Aktion oder jegliche Kombination derselben einschließen, wobei der assoziierte Standort eines oder mehrere der Folgenden umfasst: einen spezifischen Einzelhandelsstandort, einen Erholungsstandort, eine Schule, ein religiöses Etablissement oder einen gesellschaftlichen Raum; und
   Bestimmen auf der Basis der Standortdaten einer Wahrscheinlichkeit, dass das Gerät (100) an einem gewissen Standort von Interesse vorbeigekommen ist; und

   eine Ausgangsschnittstelle, die zu Folgendem konfiguriert ist:

   Bereitstellen auf der Basis der Standortdaten von mit dem Standort von Interesse assoziierten aggregierten Charakterisierungsdaten (248) zur Darstellung gemäß dem Anzeigetyp (252), wobei die aggregierten Charakterisierungsdaten eine Ansammlung von Produkten oder einen Mittelwert von Produkten einschließen, wobei ein Produkt der Ansammlung von Produkten oder des Mittelwertes von Produkten das Produkt der Wahrscheinlichkeit umfasst, dass eins aus einer Mehrzahl von Geräten am Standort von Interesse vorbeigekommen ist, wobei die Benutzer-Charakterisierungsdaten mit dem einen aus der Mehrzahl von Geräten assoziiert sind, wobei der Anzeigetyp Folgendes umfasst: A) einen Graph von Daten über die Zeit, wobei die Daten eine Anzahl von Besuchern an einem Standort von Interesse oder den Anteil von Besuchern an einem Standort von Interesse von einer demografischen Gruppe von Interesse umfassen, wobei der Anteil eine gewichtete Summe von demografischen Daten umfasst, oder B) eine anteilsmäßige Datenzerlegung nach demografischen Typen von Interesse, wobei die anteilsmäßigen Daten Besucher an einem Standort von Interesse und die anteilsmäßige Zerlegung eine gewichtete Summe von demografischen Daten umfassen; und
   wobei das Bereitstellen der aggregierten Charakterisierungsdaten Folgendes umfasst:
   Darstellen einer Intensität oder Dichte von mit dem Standort von Interesse assoziierten Besuchern, wobei die Intensität oder die Dichte mit einem Standort assoziiert ist, wobei der Standort sich auf einen Wohnort oder einen Arbeitsort bezieht, wobei der Standort auf der Basis des Folgenden bestimmt wird:

   Bestimmen (500) von Standorten des Geräts (100) während einer vorgegebenen Zeitspanne;
   Aufteilen (502) eines Bereichs mit Bezug auf die Standortdaten des Geräts (100) in ein Gitter einer Mehrzahl von Zellen;
   Auswählen (504) eines nächsten Standorts des Geräts (100) während der vorgegebenen Zeitspanne;
   Zuweisen von Gewichten (506) auf die Mehrzahl von Zellen auf der Basis zumindest zum Teil einer Distanz zum ausgewählten Standort des Geräts (100) und der Verbindungszeit des Geräts (100);
   Bestimmen, ob es weitere Gerätestandorte gibt; und
   in Antwort auf eine Bestimmung, dass es keine weiteren Gerätestandorte gibt:

   Auswählen eines Satzes der am schwersten gewichteten Gitterzellen; und
   Kombinieren (512) des Satzes der am schwersten gewichteten Gitterzellen, um einen vorgegebenen Bereich zu formen, Folgendes umfassend:
   Identifizieren des vorgegebenen Bereichs als den Arbeitsort oder den Wohnort abhängig davon, ob die vorgegebene Zeitspanne mit jeweils einer ersten vorgegebenen Zeitspanne oder einer zweiten vorgegebenen Zeitspanne assoziiert ist, wobei die erste vorgegebene Zeitspanne sich auf die Tageszeit bezieht, wobei die zweite vorgegebene Zeitspanne sich auf die Nachtzeit bezieht.

2. System nach Anspruch 1, wobei die Karte Änderungen in Besuchercharakteristiken auf der Basis zumindest zum Teil eines externen Faktors darstellt, welcher eines oder mehrere der Folgenden umfasst: eine Zeit, eine Wetterbedingung oder ein Ereignis.

3. System nach Anspruch 1, wobei die Gewichte die Wahrscheinlichkeit, dass das Gerät (100) an einem Standort von Interesse vorbeigekommen ist, und die Wahrscheinlichkeit, dass das Gerät (100) mit den Benutzer-Charakterisierungsdaten assoziiert ist, umfassen.

4. Verfahren zum Darstellen von demografischen Daten, umfassend:

Empfangen von Standortdaten (240) eines Geräts (100) von dem Gerät (100) selbst;
Empfangen eines Anzeigetyps zum Steuern einer Anzeige zum Darstellen der Standortdaten als ein Graph von Daten über die Zeit, als eine anteilsmäßige Datenzerlegung nach demografischen Typen von Interesse, oder als eine Karte, die eine Intensität oder Dichte von Besuchern darstellt, die mit einem Standort von Interesse assoziiert sind;
Bestimmen (244) unter Verwendung eines Prozessors (114) von mit dem Gerät (100) assoziierten Benutzer-Charakterisierungsdaten, wobei die Benutzer-Charakterisierungsdaten einen assoziierten Standort, eine Besuchsfrequenz, eine Unüblichkeit des Besuchs, im Wettbewerb stehende Etablissements entlang einer jüngst genommenen Route, eine vorangegangene Aktion, eine folgende Aktion oder jegliche Kombination derselben einschließen, wobei der assoziierte Standort eines oder mehrere der Folgenden umfasst: einen spezifischen Einzelhandelsstandort, einen Erholungsstandort, eine Schule, ein religiöses Etablissement oder einen gesellschaftlichen Raum;
Bestimmen auf der Basis der Standortdaten einer Wahrscheinlichkeit, dass das Gerät (100) an einem Standort von Interesse vorbeigekommen ist; und
Bereitstellen auf der Basis der Standortdaten von mit dem Standort von Interesse assoziierten aggregierten Charakterisierungsdaten (248) zur Darstellung gemäß dem Anzeigetyp (252), wobei die aggregierten Charakterisierungsdaten eine Ansammlung von Produkten oder einen Mittelwert von Produkten einschließen, wobei ein Produkt der Ansammlung von Produkten oder des Mittelwertes von Produkten das Produkt der Wahrscheinlichkeit umfasst, dass eins aus einer Mehrzahl von Geräten am Standort von Interesse vorbeigekommen ist, wobei die Benutzer-Charakterisierungsdaten mit dem einen aus der Mehrzahl von Geräten assoziiert sind, wobei der Anzeigetyp Folgendes umfasst: A) einen Graph von Daten über die Zeit, wobei die Daten eine Anzahl von Besuchern an einem Standort von Interesse oder den Anteil von Besuchern an einem Standort von Interesse von einer demografischen Gruppe von Interesse umfassen, wobei der Anteil eine gewichtete Summe von demografischen Daten umfasst, oder B) eine anteilsmäßige Datenzerlegung nach demografischen Typen von Interesse, wobei die anteilsmäßigen Daten Besucher an einem Standort von Interesse und die anteilsmäßige Datenzerlegung eine gewichtete Summe von demografischen Daten umfassen; und
wobei das Bereitstellen der aggregierten Charakterisierungsdaten Folgendes umfasst:
Darstellen einer Intensität oder Dichte von mit dem Standort von Interesse assoziierten Besuchern, wobei die Intensität oder die Dichte mit einem Standort assoziiert ist, wobei der Standort sich auf einen Wohnort oder einen Arbeitsort bezieht, wobei der Standort auf der Basis des Folgenden bestimmt wird:

Bestimmen (500) von Standorten des Geräts (100) während einer vorgegebenen Zeitspanne;
Aufteilen (502) eines Bereichs mit Bezug auf die Standortdaten des Geräts (100) in ein Gitter einer Mehrzahl von Zellen;
Auswählen (504) eines nächsten Standorts des Geräts (100) während der vorgegebenen Zeitspanne;
Zuweisen von Gewichten (506) auf die Mehrzahl von Zellen auf der Basis zumindest zum Teil einer Distanz zum ausgewählten Standort des Geräts (100) und der Verbindungszeit des Geräts (100);
Bestimmen, ob es weitere Gerätestandorte gibt; und
in Antwort auf eine Bestimmung, dass es keine weiteren Gerätestandorte gibt:

Auswählen eines Satzes der am schwersten gewichteten Gitterzellen; und
Kombinieren (512) des Satzes der am schwersten gewichteten Gitterzellen, um einen vorgegebenen Bereich zu formen, Folgendes umfassend:
Identifizieren des vorgegebenen Bereichs als den Arbeitsort oder den Wohnort abhängig davon, ob die vorgegebene Zeitspanne mit jeweils einer ersten vorgegebenen Zeitspanne oder einer zweiten vorgegebenen Zeitspanne assoziiert ist, wobei die erste vorgegebene Zeitspanne sich auf die Tageszeit bezieht, wobei die zweite vorgegebene Zeitspanne sich auf die Nachtzeit bezieht.

5. Computerprogrammprodukt zum Darstellen von demografischen Daten, wobei das Computerprogrammprodukt in einem physischen computerlesbaren Speichermedium eingebracht ist und Computerinstruktionen umfasst zum:

Empfangen von Standortdaten (240) eines Geräts (100) von dem Gerät (100) selbst;

Empfangen eines Anzeigetyps zum Steuern einer Anzeige zum Darstellen der Standortdaten als ein Graph von Daten über die Zeit, als eine anteilsmäßige Datenzerlegung nach demografischen Typen von Interesse, oder als eine Karte, die eine Intensität oder Dichte von Besuchern darstellt, die mit einem Standort von Interesse assoziiert sind;

Bestimmen von mit dem Gerät (100) assoziierten Benutzer-Charakterisierungsdaten (244), wobei die Benutzer-Charakterisierungsdaten einen assoziierten Standort, eine Besuchsfrequenz, eine Unüblichkeit des Besuchs, im Wettbewerb stehende Etablissements entlang einer jüngst genommenen Route, eine vorangegangene Aktion, eine folgende Aktion oder jegliche Kombination derselben einschließen, wobei der assoziierte Standort eines oder mehrere der Folgenden umfasst: einen spezifischen Einzelhandelsstandort, einen Erholungsstandort, eine Schule, ein religiöses Etablissement oder einen gesellschaftlichen Raum;

Bestimmen auf der Basis der Standortdaten einer Wahrscheinlichkeit, dass das Gerät (100) an einem Standort von Interesse vorbeigekommen ist; und

Bereitstellen auf der Basis der Standortdaten von mit dem Standort von Interesse assoziierten aggregierten Charakterisierungsdaten (248) zur Darstellung gemäß dem Anzeigetyp (252), wobei die aggregierten Charakterisierungsdaten eine Ansammlung von Produkten oder einen Mittelwert von Produkten einschließen, wobei ein Produkt der Ansammlung von Produkten oder des Mittelwertes von Produkten das Produkt der Wahrscheinlichkeit umfasst, dass eins aus einer Mehrzahl von Geräten am Standort von Interesse vorbeigekommen ist, wobei die Benutzer-Charakterisierungsdaten mit dem einen aus der Mehrzahl von Geräten assoziiert sind, wobei der Anzeigetyp umfasst: A) einen Graph von Daten über die Zeit, wobei die Daten eine Anzahl von Besuchern an einem Standort von Interesse oder den Anteil von Besuchern an einem Standort von Interesse von einer demografischen Gruppe von Interesse umfassen, wobei der Anteil eine gewichtete Summe von demografischen Daten umfasst, oder B) eine anteilsmäßige Datenzerlegung nach demografischen Typen von Interesse, wobei die anteilsmäßigen Daten Besucher an einem Standort von Interesse und die anteilsmäßige Datenzerlegung eine gewichtete Summe von demografischen Daten umfassen; und

wobei das Bereitstellen der aggregierten Charakterisierungsdaten Folgendes umfasst:

Darstellen einer Intensität oder Dichte von mit dem Standort von Interesse assoziierten Besuchern, wobei die Intensität oder die Dichte mit einem Standort assoziiert ist, wobei der Standort sich auf einen Wohnort oder einen Arbeitsort bezieht, wobei der Standort auf der Basis des Folgenden bestimmt wird:

Bestimmen (500) von Standorten des Geräts (100) während einer vorgegebenen Zeitspanne;

Aufteilen (502) eines Bereichs mit Bezug auf die Standortdaten des Geräts (100) in ein Gitter einer Mehrzahl von Zellen;

Auswählen (504) eines nächsten Standorts des Geräts (100) während der vorgegebenen Zeitspanne;

Zuweisen von Gewichten (506) auf die Mehrzahl von Zellen auf der Basis zumindest zum Teil einer Distanz zum ausgewählten Standort des Geräts (100) und der Verbindungszeit des Geräts (100);

Bestimmen, ob es weitere Gerätestandorte gibt; und

in Antwort auf eine Bestimmung, dass es keine weiteren Gerätestandorte gibt:

Auswählen eines Satzes der am schwersten gewichteten Gitterzellen; und

Kombinieren (512) des Satzes der am schwersten gewichteten Gitterzellen, um einen vorgegebenen Bereich zu formen, Folgendes umfassend:

Identifizieren des vorgegebenen Bereichs als den Arbeitsort oder den Wohnort abhängig davon, ob die vorgegebene Zeitspanne mit jeweils einer ersten vorgegebenen Zeitspanne oder einer zweiten vorgegebenen Zeitspanne assoziiert ist, wobei die erste vorgegebene Zeitspanne sich auf die Tageszeit bezieht, wobei die zweite vorgegebene Zeitspanne sich auf die Nachtzeit bezieht.

## Revendications

1. Un système d'affichage de données démographiques, comprenant :

une interface d'entrée configurée de façon à :

recevoir des données d'emplacement (240) d'un dispositif (100) à partir du dispositif (100) lui-même,
recevoir un type d'affichage destiné à la commande d'un dispositif d'affichage de façon à afficher les données d'emplacement sous la forme d'un graphe de données en fonction du temps, sous la forme d'une décomposition de données fractionnaire par types démographiques d'intérêt ou sous la forme d'une carte affichant une intensité ou une densité de visiteurs associée à un lieu d'intérêt,

un processeur (114) configuré de façon à :

déterminer des données de caractérisation d'utilisateur (244) associées au dispositif, les données de caractérisation d'utilisateur comprenant un emplacement associé, une fréquence de visite, un caractère inhabituel de visite, des établissements concurrents le long d'un itinéraire récent, une action précédente, une action suivante, ou toute combinaison de ceux-ci, où l'emplacement associé comprend un ou plusieurs éléments parmi les suivants : un lieu de revente au détail spécifique, un lieu récréatif, une école, un établissement religieux ou un espace social, et
déterminer, en fonction des données d'emplacement, une
probabilité que le dispositif (100) est passé par un lieu d'intérêt donné, et une interface de sortie configurée de façon à :
fournir, en fonction des données d'emplacement, des données de caractérisation agrégées (248) associées au lieu d'intérêt à des fins d'affichage en fonction du type d'affichage (252), où les données de caractérisation agrégées comprennent une accumulation de produits ou une moyenne de produits, un produit de l'accumulation de produits ou de la moyenne de produits comprenant le produit de la probabilité qu'un dispositif d'une pluralité de dispositifs soit passé par le lieu d'intérêt avec les données de caractérisation d'utilisateur associées au dispositif de la pluralité de dispositifs, où le type d'affichage comprend A) un graphe de données en fonction du temps, les données comprenant un nombre de visiteurs d'un lieu d'intérêt ou la fraction de visiteurs d'un lieu d'intérêt d'un groupe démographique d'intérêt, la fraction comprenant une somme pondérée de données démographiques, ou B) une décomposition de données fractionnaire par types démographiques d'intérêt, et les données fractionnaires comprenant des visiteurs d'un lieu d'intérêt, la décomposition fractionnaire comprenant une somme pondérée de données démographiques, et

où la fourniture des données de caractérisation agrégées comprend :
l'affichage d'une intensité ou d'une densité de visiteurs associée au lieu d'intérêt, où l'intensité ou la densité est associée à un emplacement, l'emplacement étant relatif à un emplacement de domicile ou un emplacement de lieu de travail, où l'emplacement est déterminé en fonction des opérations suivantes :

déterminer (500) des emplacements du dispositif (100) au cours d'une plage temporelle prédéfinie,
diviser (502) une zone relative aux données d'emplacement du dispositif (100) en une grille d'une pluralité de cellules,
sélectionner (504) un emplacement suivant du dispositif (100) au cours de la plage temporelle prédéfinie,
ajouter des poids (506) à la pluralité de cellules en fonction au moins en partie d'une distance à l'emplacement sélectionné du dispositif (100) et d'un temps de connexion du dispositif (100),
déterminer s'il y a d'autres emplacements de dispositif, et en réponse à une détermination qu'il n'y a plus d'autres emplacements de dispositif :

sélectionner un ensemble des cellules de grille aux poids les plus élevés, et
combiner (512) l'ensemble des cellules de grille aux poids les plus élevés de façon à former une zone prédéfinie, comprenant :
l'identification de la zone prédéfinie en tant que l'emplacement de lieu de travail ou l'emplacement de domicile selon que la plage temporelle prédéfinie est associée à une première plage temporelle prédéfinie ou une deuxième plage temporelle prédéfinie, respectivement, où la première plage temporelle prédéfinie concerne la journée, où le deuxième plage temporelle prédéfinie concerne la nuit.

2. Le système selon la Revendication 1, où la carte affiche des modifications dans des caractéristiques de visiteur en fonction au moins en partie d'un facteur externe, qui comprend un ou plusieurs éléments parmi les suivants : une heure, une condition météorologique ou un événement.

3. Le système selon la Revendication 1 où les poids comprennent la probabilité que le dispositif (100) soit passé par un lieu d'intérêt et la probabilité que le dispositif (100) soit associé aux données de caractérisation d'utilisateur.

4. Un procédé d'affichage de données démographiques, comprenant :

la réception de données d'emplacement (240) d'un dispositif (100) à partir du dispositif (100) lui-même,

la réception d'un type d'affichage destiné à la commande d'un dispositif d'affichage de façon à afficher les données d'emplacement sous la forme d'un graphe de données en fonction du temps, sous la forme d'une décomposition de données fractionnaire par types démographiques d'intérêt ou sous la forme d'une carte affichant une intensité ou une densité de visiteurs associée à un lieu d'intérêt,

la détermination (244), au moyen d'un processeur (114), de données de caractérisation d'utilisateur associées au dispositif (100), les données de caractérisation d'utilisateur comprenant un emplacement associé, une fréquence de visite, un caractère inhabituel de visite, des établissements concurrents le long d'un itinéraire récent, une action précédente, une action suivante, ou toute combinaison de ceux-ci, où l'emplacement associé comprend un ou plusieurs éléments parmi les suivants : un lieu de revente au détail spécifique, un lieu récréatif, une école, un établissement religieux ou un espace social,

la détermination, en fonction des données d'emplacement, d'une probabilité que le dispositif (100) soit passé par un lieu d'intérêt, et

la fourniture, en fonction des données d'emplacement, de données de caractérisation agrégées (248) associées au lieu d'intérêt à des fins d'affichage en fonction du type d'affichage (252), où les données de caractérisation agrégées comprennent une accumulation de produits ou une moyenne de produits, un produit de l'accumulation de produits ou de la moyenne de produits comprenant le produit de la probabilité qu'un dispositif d'une pluralité de dispositifs soit passé par le lieu d'intérêt avec les données de caractérisation d'utilisateur associées au dispositif de la pluralité de dispositifs, où le type d'affichage comprend A) un graphe de données en fonction du temps, les données comprenant un nombre de visiteurs d'un lieu d'intérêt ou la fraction de visiteurs d'un lieu d'intérêt d'un groupe démographique d'intérêt, la fraction comprenant une somme pondérée de données démographiques, ou B) une décomposition de données fractionnaire par types démographiques d'intérêt, et les données fractionnaires comprenant des visiteurs d'un lieu d'intérêt, la décomposition de données fractionnaire comprenant une somme pondérée de données démographiques, et

où la fourniture des données de caractérisation agrégées comprend :
l'affichage d'une intensité ou d'une densité de visiteurs associée au lieu d'intérêt, où l'intensité ou la densité est associée à un emplacement, l'emplacement étant relatif à un emplacement de domicile ou un emplacement de lieu de travail, où l'emplacement est déterminé en fonction des opérations suivantes :

la détermination (500) d'emplacements du dispositif (100) au cours d'une plage temporelle prédéfinie,

la division (502) d'une zone relative aux données d'emplacement du dispositif (100) en une grille d'une pluralité de cellules,

la sélection (504) d'un emplacement suivant du dispositif (100) au cours de la plage temporelle prédéfinie,

l'ajout de poids (506) à la pluralité de cellules en fonction au moins en partie d'une distance à l'emplacement sélectionné du dispositif (100) et d'un temps de connexion du dispositif (100),

la détermination s'il y a d'autres emplacements de dispositif, et en réponse à une détermination qu'il n'y a plus d'autres emplacements de dispositif :

la sélection d'un ensemble des cellules de grille aux poids les plus élevés, et

la combinaison (512) de l'ensemble des cellules de grille aux poids les plus élevés de façon à former une zone prédéfinie, comprenant :

l'identification de la zone prédéfinie en tant que l'emplacement de lieu de travail ou l'emplacement de domicile selon que la plage temporelle prédéfinie est associée à une première plage temporelle prédéfinie ou une deuxième plage temporelle prédéfinie, respectivement, où la première plage temporelle prédéfinie concerne la journée, où la deuxième plage temporelle prédéfinie concerne la nuit.

5. Un produit de programme informatique destiné à l'affichage de données démographiques, le produit de programme informatique étant incorporé dans un support à mémoire lisible par ordinateur tangible et contenant des instructions informatiques destinées à :

la réception de données d'emplacement (240) d'un dispositif (100) à partir du dispositif (100) lui-même,

la réception d'un type d'affichage destiné à la commande d'un dispositif d'affichage de façon à afficher les données d'emplacement sous la forme d'un graphe de données en fonction du temps, sous la forme d'une décomposition de données fractionnaire par types démographiques d'intérêt ou sous la forme d'une carte affichant une intensité ou une densité de visiteurs associée à un lieu d'intérêt,

la détermination de données de caractérisation d'utilisateur (244) associées au dispositif (100), les données de caractérisation d'utilisateur comprenant un emplacement associé, une fréquence de visite, un caractère inhabituel de visite, des établissements concurrents le long d'un itinéraire récent, une action précédente, une action suivante, ou toute combinaison de ceux-ci, où l'emplacement associé comprend un ou plusieurs éléments parmi les suivants : un lieu de revente au détail spécifique, un lieu récréatif, une école, un établissement religieux ou un espace social,

la détermination, en fonction des données d'emplacement, d'une probabilité que le dispositif (100) soit passé par un lieu d'intérêt, et

la fourniture, en fonction des données d'emplacement, de données de caractérisation agrégées (248) associées au lieu d'intérêt à des fins d'affichage en fonction du type d'affichage (252), où les données de caractérisation agrégées comprennent une accumulation de produits ou une moyenne de produits, un produit de l'accumulation de produits ou de la moyenne de produits comprenant le produit de la probabilité qu'un dispositif d'une pluralité de dispositifs soit passé par le lieu d'intérêt avec les données de caractérisation d'utilisateur associées au dispositif de la pluralité de dispositifs, où le type d'affichage comprend A) un graphe de données en fonction du temps, les données comprenant un nombre de visiteurs d'un lieu d'intérêt ou la fraction de visiteurs d'un lieu d'intérêt d'un groupe démographique d'intérêt, la fraction comprenant une somme pondérée de données démographiques, ou B) une décomposition de données fractionnaire par types démographiques d'intérêt, et les données fractionnaires comprenant des visiteurs d'un lieu d'intérêt, la décomposition de données fractionnaire comprenant une somme pondérée de données démographiques, et

où la fourniture des données de caractérisation agrégées comprend :

l'affichage d'une intensité ou d'une densité de visiteurs associée au lieu d'intérêt, où l'intensité ou la densité est associée à un emplacement, l'emplacement étant relatif à un emplacement de domicile ou un emplacement de lieu de travail, où l'emplacement est déterminé en fonction des opérations suivantes :

la détermination (500) d'emplacements du dispositif (100) au cours d'une plage temporelle prédéfinie,
la division (502) d'une zone relative aux données d'emplacement du dispositif (100) en une grille d'une pluralité de cellules,
la sélection (504) d'un emplacement suivant du dispositif (100) au cours de la plage temporelle prédéfinie,
l'ajout de poids (506) à la pluralité de cellules en fonction au moins en partie d'une distance à l'emplacement sélectionné du dispositif (100) et d'un temps de connexion du dispositif (100),
la détermination s'il y a d'autres emplacements de dispositif, et en réponse à une détermination qu'il n'y a plus d'autres emplacements de dispositif :

la sélection d'un ensemble des cellules de grille aux poids les plus élevés, et
la combinaison (512) de l'ensemble des cellules de grille aux poids les plus élevés de façon à former une zone prédéfinie, comprenant :
l'identification de la zone prédéfinie en tant que l'emplacement de lieu de travail ou l'emplacement de domicile selon que la plage temporelle prédéfinie est associée à une première plage temporelle prédéfinie ou une deuxième plage temporelle prédéfinie, respectivement, où la première plage temporelle prédéfinie concerne la journée, où la deuxième plage temporelle prédéfinie concerne la nuit.

Fig. 1

Start

200 —⌇ Select Next Device

202 —⌇ Determine Probability Device Is Associated With Location Of Interest

204 —⌇ Determine Locations Associated With Device

206 —⌇ Determine Demographics Associated With Device

208 —⌇ Scale Demographics Associated With Device By Probability Device Is Associated With Location Of Interest

210 —⌇ Add Scaled Device Demographics To Agglomerate Demographics

212 —⌇ More Devices?

Yes

No

End

Fig. 2A

Start

220 — Receive A Location Data Of A Device

222 — Determine A User Characterization Data Associated With The Device

224 — Determine A Probability That The Device Is Associated With A Location Of Interest

226 — Provide An Agglomerated Characterization Data Associated With The Location Of Interest

End

Fig. 2B

```
                    ┌──────────┐
                    │  Start   │
                    └──────────┘
                         │
                         ▼
        ┌────────────────────────────────────────┐
   240  │  Receive A Location Data Of A Device     │
        └────────────────────────────────────────┘
                         │
                         ▼
        ┌────────────────────────────────────────┐
        │  Determine A User Characterization        │
   244  │  Data Associated With The Device          │
        └────────────────────────────────────────┘
                         │
                         ▼
        ┌────────────────────────────────────────┐
        │  Determine A Probability That The Device Is│
   246  │  Associated With The Location Of Interest │
        └────────────────────────────────────────┘
                         │
                         ▼
        ┌────────────────────────────────────────┐
        │        Provide An Aggregated              │
   248  │  Characterization Data Associated         │
        │  With The Location Of Interest            │
        └────────────────────────────────────────┘
                         │
                         ▼
        ┌────────────────────────────────────────┐
   250  │       Receive A Display Type              │
        └────────────────────────────────────────┘
                         │
                         ▼
        ┌────────────────────────────────────────┐
        │  Reaggregate Data Based On                │
   252  │  The Received Display Type                │
        └────────────────────────────────────────┘
                         │
                         ▼
                    ┌──────────┐
                    │   End    │
                    └──────────┘
```

Fig. 2C

Start

300

Data
Showing Device
Near Location Of
Interest?

Yes

No

302

Determine Distance From
Maximum Likelihood Point
Of Connection Location
To Location Of Interest

306

Identify Pairs Of Device
Locations In Region Of
Location Of Interest

Determine Probability
Based At Least In Part
On Distance

304

End

For Each Pair Of Device
Locations, Determine
Probability That The Path
Taken Between The
Device Locations Includes
The Location Of Interest

308

End

Fig. 3

```
              ┌──────────┐
              │  Start   │
              └──────────┘
                    │
                    ▼
       ┌──────────────────────────────┐
  400 ⌇│  Determine Home Location      │
       └──────────────────────────────┘
                    │
                    ▼
       ┌──────────────────────────────┐
  402 ⌇│  Determine Work Location      │
       └──────────────────────────────┘
                    │
                    ▼
       ┌──────────────────────────────┐
  404 ⌇│  Determine Other Locations    │
       └──────────────────────────────┘
                    │
                    ▼
              ┌──────────┐
              │   End    │
              └──────────┘
```

Fig. 4

Start

500 ⏦ Determine Nighttime Device Locations

502 ⏦ Divide Map Into Grid Cells

504 ⏦ Select Next Nighttime Device Location

506 ⏦ Add Weight To Each Grid Cell Based On Distance To Device Location And Connection Time

508 ⏦ More Nighttime Device Locations?  Yes

No

510 ⏦ Select Most Heavily Weighted Grid Cells

512 ⏦ Combine Selected Grid Cells To Form Home Area

End

Fig. 5

Fig. 6

Start

700 ⌇ Determine Total Number Of Devices Associated With Location

702 ⌇ Determine Total Number Of People Associated With Location

704 ⌇ Divide Total Number Of People Associated With Location By Total Number Of Devices Assoicatiated With Location To Determine Scaling Factor

End

Fig. 7

Fig. 8

# of area
visits per
month

% of special
event visitors

100%

31+ visits — 12%

16-30 visits — 36%

50%

6-15 visits — 14%

2-5 visits — 8%

1 visit — 30%

0%

Fig. 9

% of visitors that shop at...

100%

80%

60%

40%

56%

20%

0%

Whole Foods

Walmart

28%

Apple Store

40%

Farmer's Markets

44%

Shopping Malls

32%

Fig. 10A

% of visitors that exercise at...

Fig. 10B

500

Fig. 11

## REFERENCES CITED IN THE DESCRIPTION

**Patent documents cited in the description**

- US 2013097162 A
- US 2012071175 A

- WO 2013001421 A1

**Non-patent literature cited in the description**

- **JEFFREY HIGHTOWER et al.** *Learning and Recognising the Places We Go,* 19 August 2005